# EUROPEAN PATENT APPLICATION

(11) **EP 1 752 663 A1**
(43) Date of publication of application: **14.02.2007**
(21) Application number: 05739289.6
(22) Date of filing: 16.05.2005
(51) Int. Cl.: F04C 5/00

(54) **TUBE CASSETTE UNIT AND LIQUID CONVEYANCE DEVICE USING THE SAME**

(30) Priority: 18.05.2004 JP 2004147325; 18.05.2004 JP 2004147335; 07.02.2005 JP 2005030704; 07.02.2005 JP 2005030709
(71) Applicant: Matsushita Electric Industries Co., Ltd., Kadoma-shi, Osaka 571-8501 (JP)
(72) Inventor: HIGUCHI, Akira, c/o Matsushita Elect. Ind. Co.,Ltd, Chuo-ku, Osaka-shi, Osaka 540-6319 (JP)
(74) Representative: Ehlers, Jochen
(86) International application number: PCT/JP2005/008870
(87) International publication number: WO 2005/111426

(57) **Abstract**

A tube cassette unit 40 including a flexible conveying tube 45, a discharge nozzle 41 inserted into one end of the conveying tube and a relay pipe 47 inserted into the other end, a discharge side holding part 42 for coupling and holding the one end of the conveying tube to the discharge nozzle, and an introduction side holding part 43 for coupling and holding the other end of the conveying tube to the relay pipe is used, where the discharge side holding part 42 and the introduction side holding part 43 are removably attached with the conveying tube 45 of the tube cassette 40 wound and extended on at least two rollers 61 of a rotating body 14 arranged with a plurality of rollers 61 at equidistance in the circumferential form, and a closed space 110 is formed in the conveying tube 45 by the roller 61 pressed against the conveying tube, and the closed space 110 is moved to convey the liquid by the rotation of the rotating body 14.

## Description

### Technical Field

The present invention relates to a liquid conveying device for conveying liquid in a tube by applying a press-rolling action on the flexible tube with a roller, and a tube cassette unit used in a liquid discharging device for discharging liquid in the tube.

### Background Art

Conventionally, a liquid conveying device is known in which an elastic tube is curved and held at an arc-shaped inner peripheral wall surface of a holder, and a rotor including a plurality of pressing rollers on the outer peripheral part is rotatably driven thereby applying the press-rolling action to the tube as the pressing roller rolls and travels on the tube at a predetermined pressure welding force and discharging the liquid in the tube from the distal end. The liquid conveying device is disclosed in for example, Japanese Laid-Open Patent Publication No. H10-131861, Japanese Laid-Open Patent Publication No. H9-287577, Japanese Laid-Open Patent Publication No. 2001-218841 and the like.

In such liquid conveying device, the rollers arranged on the peripheral surface of the rotatably driven rotating body are pressed against the flexible tube held in a curved state along a pressing body having an arc-shaped peripheral wall to define a deformed portion where the tube is constricted and squashed by the pressing body and the roller. The device conveys the liquid in the tube with the press-rolling action by rotating the rotating body in a constant direction in the above state and moving the position of the deformed portion of the tube.

The liquid conveying device is used in various apparatuses. For example, use is made in fluid infusion pump, experiment equipments or the like as disclosed in Japanese Laid-Open Patent Publication No. 2001-218841. The type of liquid to be conveyed in the tube is sometimes frequently changed due to the property of the apparatus. In order to prevent the problem of contamination and the like of the liquid in the tube, the tube itself is sometimes required to be changed frequently.
[Patent document 1] Japanese Laid-Open Patent Publication No. H10-131861
[Patent document 2] Japanese Laid-Open Patent Publication No. H9-287577
[Patent document 3] Japanese Laid-Open Patent Publication No. 2001-218841

### Disclosure of the Invention

### Problem to be Solved by the Invention

However, in the conventional liquid conveying device, the tube must be removed after the roller or the pressing body is removed to change the tube since the tube is maintained in the constricted state by the pressing body and the roller. Thus, the trouble of changing the tube is large. In particular, the trouble of changing the tube is enormous in the multi-channel apparatus in which the tube is arranged in pluralities since the rollers or the pressing bodies worth the number of tubes must be removed.

In the device disclosed in Japanese Laid-Open Patent Publication No. H10-131861, the removal of the squeezing plate is performed relatively easily since the operation of the squeezing plate for squeezing the tube is performed by driving an electrically operated solenoid, but is still very troublesome since the squeezing plate and the electrically operated solenoid must be coupled, and further, the installing location must be adjusted so that the tube is positioned between the squeezing plate and the roller when attaching the tube.

In Japanese Laid-Open Patent Publication No. 2001-218841, the pressing body and the tube are integrally configured as a pump cassette, and configured so that the cassette is integrally removed when changing the cassette, but the configuration becomes complicating. In particular, the configuration becomes more complicating when used in the multi-channel device in which the tube is arranged in pluralities.

Since the tube is sandwiched by the roller and the pressing body in both articles, the tube is difficult to check from the outside, and whether the liquid is being conveyed is difficult to check visually.

Furthermore, if discharge nozzles are attached to the discharge side of the conveying tube, the position of the respective discharge nozzle must be set in accordance with the container. Thus, the position of the discharge nozzles must be changed when the discharging container is changed and the respective conveying tube must be attached individually, and thus the trouble in changing the conveying tube becomes enormous.

Therefore, the issue to be solved by the present invention is to provide a tube cassette unit in which the conveying tube of the multi-channel is easily changed, and a liquid conveying device in which the trouble of changing the tube is saved and in which the liquid is conveyed by applying the press-rolling action to the tube.

### Means for Solving the Problem

The first aspect of the present invention provides liquid conveying device comprising:
a rotating body, configured with a lateral axis as a rotating axis and rotatable with the rotating axis as a center, arranged with at least three rollers at equidistance in a circumferential form with the rotating axis as the center;
a tube cassette unit including a flexible conveying tube, a first pipe body inserted into a liquid introduction side end of the conveying tube, an introduction side holding part for holding the first pipe body, a second pipe body inserted into a liquid discharge side end of the conveying tube, and a discharging side holding part for holding the second pipe body;
a tube cassette attachment unit for removably attaching the introduction side holding part and the discharge side holding part with the conveying tube wound to at least two rollers out of the rollers of the rotating body to extend to an extent a closed space is formed in the conveying tube; and
a rotating body drive mechanism for rotating the rotating body with the rotating axis as the center to change a contacting position of the at least two rollers and the conveying tube and moving the closed space towards a liquid discharge side end side.

The liquid conveying device forms a closed space in the tube without using a pressing body for sandwiching the tube with the rollers by contacting the conveying tube to the rollers of the rotating body in an extended state and pressing the tube using the tension applied to the relevant conveying tube by the roller. When the rotating body is rotated in this state, the contacting positions of the rollers and the tube changes, whereby the closed space move and the liquid present in the tube moves.

The number of rollers wound by the conveying tube only needs to be at least two, but may be more. As long as at least two rollers are contacting the conveying tube at any phase, the number of rollers that contact with the phase of the rotation of the rollers may be changed. That is, three rollers contact the conveying tube at a certain phase and two closed spaces are formed as a result, but the roller at the front may separate from the conveying tube due to the rotation of the rollers thereby releasing the closed space at the front before the next roller contacts the conveying tube and form a new closed space.

The second aspect of the present invention provides the liquid conveying device of the first aspect, wherein a side opposite a side contacting the roller of a position the conveying tube is wound to the roller of the rotating body is released as a conveying tube attachment and detachment space.

The third aspect of the present invention provides the liquid conveying device of the first aspect, wherein the tube cassette attachment unit attaches the tube cassette unit so that the conveying tube is wound to at least three rollers to continuously form a plurality of closed spaces.

The fourth aspect of the present invention provides the liquid conveying device of the first aspect, wherein the introduction side holding part is configured to couple and hold the liquid introduction side end of the conveying tube to the first pipe body, and the discharge side holding part is configured to couple and hold the discharge side end of the conveying tube to the second pipe body.

The fifth aspect of the present invention provides the liquid conveying device of the fourth aspect, wherein the introduction side holding part includes an introduction side pipe holding member through which the first pipe body is passed for fixing and a coupling member, integrally coupled with the introduction side pipe holding member, for pressing and holding one end of the conveying tube as an insertion site of the first pipe on an outer surface of the first pipe body; and
the discharge holding member includes a plate shaped discharge side pipe holding member through which the second pipe body is passed for fixing for fixing and a plate shaped coupling member, integrally coupled with the discharge side pipe holding member, for pressing and holding the other end of the conveying tube or an insertion site of the second pipe to an outer surface of the second pipe body.

The sixth aspect of the present invention provides the liquid conveying device of the fifth aspect, wherein the coupling member of the introduction side holding part is a plate shaped body including a through hole fittable with the first pipe body, the through hole being configured so as to gradually narrow from an insertion surface towards a back surface so that an inner diameter dimension of the insertion surface of a side into which the first pipe body is inserted becomes greater than an outer diameter dimension of the first pipe body fixed to the introduction side pipe holding member, and so that an inner diameter dimension of the back surface of the insertion surface becomes substantially the same as the outer diameter dimension of the first pipe body; and
the coupling member of the discharge side holding part is a plate shaped body including a through hole fittable with the second pipe body, the through hole being configured so as to gradually narrow from an insertion surface towards a back surface so that an inner diameter dimension of the insertion surface of a side into which the second pipe body is inserted becomes greater than an outer diameter dimension of the second pipe body fixed to the discharge side pipe holding member, and so that an inner diameter dimension of the back surface of the insertion surface becomes substantially the same as the outer diameter dimension of the second pipe body.

In the liquid conveying device according to the seventh aspect of the present invention, the relative position of a first pipe body is adjusted with respect to the introduction side pipe holding member by the introduction side holding member for holding the first pipe body so as to be movable in the axis direction and the position adjustment member. The tension to be applied to the conveying tube can thus be adjusted, and the amount of liquid conveyed through the conveying tube can be adjusted. In other words, since the tension applied to the conveying tube changes thereby changing the inner diameter of the conveying tube involved in the pulling force by adjusting the relative position of the first pipe body and the introduction side pipe holding member, the conveying amount of the liquid by the press-rolling action of the roller can be adjusted.

The eighth aspect of the present invention provides the liquid conveying device of the seventh aspect, wherein the first pipe body includes a flange part arranged projecting to a periphery at an intermediate position in the axis direction;
the introduction side pipe holding member includes a through hole to be fitted with the first pipe body; and
the position adjustment mechanism includes a screw hole arranged at the flange part or at a position facing the flange part of the introduction side pipe holding member, and an adjustment screw screw-fit to the screw hole to adjust a distance between the flange part and the introduction side pipe holding member in the axis direction.

The ninth aspect of the present invention provides the liquid conveying device of the first aspect, wherein the second pipe body is a discharge nozzle.

The tenth aspect of the present invention provides the liquid conveying device of the first aspect, wherein the tube cassette unit further includes,
a liquid supply pipe communicating with a liquid storage part for storing a liquid; and
an introducing tube communicating with the conveying tube by inserting the liquid supply pipe into one end thereof and the other end side of the first pipe body into the other end thereof.

The 11th aspect of the present invention provides the liquid conveying device of the first aspect, wherein the tube cassette unit includes a plurality of the conveying tubes arranged parallel in a band shape, first pipe bodies inserted into liquid introduction side ends of all the conveying tubes, introduction side holding parts for holding the first pipe bodies, second pipe bodies inserted into liquid discharge side ends of all the conveying tubes, and discharge side holding parts for holding the second pipe bodies; and
all the conveying tubes are wound to the at least two rollers of the rotating body to form closed spaces, the closed spaces being simultaneously moved towards the liquid discharge side end side with a rotation of the rotating body.

The 12th aspect of the present invention provides the liquid conveying device of the 11th aspect 11, wherein the rollers are arranged so as to be parallel to the rotating axis.

The 13th aspect of the present invention provides the liquid conveying device of the 12th aspect, wherein the rotating body includes a plurality of cylindrical rollers formed extending perpendicular to two circular discs and rotatable with the axis as the center between the two circular discs arranged parallel to each other at a distance.

The 14th aspect of the present invention provides the liquid conveying device of the first aspect, wherein the rotating body drive mechanism includes a rotation angle detection part for detecting a rotation angle of the rotating body, and a rotation angle controlling part for controlling the conveying amount of the liquid by controlling the rotation angle of the rotating body detected by the rotation angle detection part.

The 15th aspect of the present invention provides a tube cassette unit removably attached to a liquid discharge device including a rotating body, configured with a lateral axis as a rotating axis and rotatable with the rotating axis as a center, arranged with at least three rollers at equidistance in a circumferential form with the rotating axis as the center, for applying press-rolling action to conveying tubes with the rollers to convey liquid to discharge nozzles and discharge from the discharge nozzles to a microtiter plate, the tube cassette unit comprising:
a plurality of flexible conveying tubes arranged in parallel in a band shape and wound to the at least two rollers of the rotating body while being extended from an upper sides;
a plurality of relay pipes serving as a first pipe body and having one ends respectively inserted into one ends of the plurality of the conveying tubes;
a plurality of discharge nozzles serving as a second pipe body, respectively inserted into the other ends of the plurality of the conveying tubes, and arranged according to a pitch of wells in one column arranged in the microtiter plate;
an introduction side holding part for holding the relay pipes, configured to be removably attached to the liquid discharge device;
a discharge side holding part for holding the discharge nozzles, configured to be removably attached to the liquid discharge device; and
a plurality of introducing tubes having one ends respectively inserted into the other ends of the plurality of relay pipes to respectively communicate with the conveying tubes, for suctioning the liquid from the other ends.

The liquid discharging device contacts the conveying tubes to the rollers of the rotating body in the extended state, and uses the tension applied to the relevant conveying tube by the rollers to press the tubes. The closed space is formed in the tubes by the tension applied to the conveying tubes without using the pressing body for sandwiching the tubes with the roller. When the rotating body is rotated in this state, the contacting position of the rollers and the tubes moves and the closed space moves accordingly, whereby the liquid present in the tube moves.

The tube cassette unit of the 15th aspect includes a plurality of the conveying tubes wound to the liquid discharging device. Each conveying tubes has the discharge nozzles and the relay pipes inserted into either end to form one unit with the relay pipes held at the introduction side holding part and the discharge nozzles at the discharge side holding part. The discharge nozzles are arranged in the discharge side holding part in correspondence to the pitch of the well column of the microtiter plate arrayed in a direction substantially parallel to the discharge nozzles. Therefore, when attaching to the liquid discharging device, a plurality of tubes are attached to the device all at once by attaching the introduction side holding part and the discharge side holding part respectively at a predetermined attachment part of the liquid discharging device. Similarly, when detaching the tube cassette unit, a plurality of the conveying tubes is detached all at once by detaching the introduction side holding part and the discharge side holding part.

The 16th aspect of the present invention provides a plurality of discharge nozzles are arranged at an arrangement corresponding to the pitch of the well column of the microtiter, that is, the tube cassette unit of the 15th aspect, wherein the plurality of discharge nozzles are arranged at a pitch same as or at a pitch integral multiples of a pitch of adjacent wells of the microtiter plate.

The 17th aspect of the present invention provides the tube cassette unit of the 15th aspect, wherein the introduction side holding part includes an introduction side pipe holding member through which the relay pipe is passed for fixing, and a coupling member integrally coupled with the introduction side pipe holding member, for pressing and holding one ends of the conveying tubes as insertion sites of the relay pipes on outer surfaces of the relay pipes; and
the discharge side holding part includes a plate shaped discharge side pipe holding member through which the discharge nozzles is passed for fixing, and a plate shaped coupling member, integrally coupled with the discharge side pipe holding member, for pressing and then holding the other ends of the conveying tubes as an insertion sites of the discharge nozzles on an outer surfaces of the discharge nozzles.

The 18th aspect of the present invention provides the tube cassette unit of the 17th aspect, wherein the coupling member of the introduction side holding part is a plate shaped body including a through hole fittable with the relay pipes, the through hole being configured so as to gradually narrow from an insertion surface towards a back surface so that an inner diameter dimension of the insertion surface of a side into which the relay pipes are inserted becomes greater than an outer diameter dimensions of the relay pipes fixed to the introduction side pipe holding member, and so that an inner diameter dimension of the back surface of the insertion surface becomes substantially the same as the outer diameter dimensions of the relay pipes; and
the coupling member of the discharge side holding part is a plate shaped body including a through hole fittable with the discharge nozzles, the through hole being configured so as to gradually narrow from an insertion surface towards a back surface so that an inner diameter dimension of the insertion surface of a side into which the second pipe body is inserted becomes greater than an outer diameter dimension of the discharge nozzles fixed to the discharge side pipe holding member, and so that an inner diameter dimension of the back surface of the insertion surface becomes substantially the same as the outer diameter dimension of the discharge nozzle.

The 19th aspect of the present invention provides the tube cassette unit of the 15th aspect, wherein the introduction side holding part includes a griping part used in pulling the introduction side holding part to extend the conveying tubes after the discharge side holding part is attached to the liquid discharge device.

The 20th aspect of the present invention provides a tube cassette unit removably attached to a liquid discharge device including a rotating body, configured with a lateral axis as a rotating axis and rotatable with the rotating axis as a center, arranged with at least three rollers at equidistance in a circumferential form with the rotating axis as the center, for applying press-rolling action to conveying tubes with the rollers to convey liquid to discharge nozzles, and discharge from the discharge nozzles to a microtiter plate, the tube cassette unit comprising:
a plurality of flexible conveying tubes arranged in parallel in a band shape and wound to the at least two rollers of the rotating body while being extended from upper sides;
a plurality of relay pipes serving as a first pipe body and having one ends respectively inserted into one ends of the plurality of the conveying tube;
a plurality of discharge nozzles respectively serving as a second pipe body, respectively inserted into the other ends of the plurality of the conveying tubes, and arranged according to a pitch of wells in one column arranged in the microtiter plate;
an introduction side holding part, removably attached to the liquid discharging device and including an introduction side holding member for holding the plurality of relay pipes so as to be movable in an axis direction, and a position of the relay pipes adjustment mechanism for individually adjusting a position in the axis direction with respect to the introduction side pipe holding member;
a discharge side holding part for holding the discharge nozzles and configured to be removably attached to the liquid discharge device; and
a plurality of introducing tubes having one ends respectively inserted into the other ends of the plurality of relay pipes to respectively communicate with the conveying tubes, for suctioning the liquid from the other ends.

The tube cassette unit of the 21st aspect of the present invention is a tube cassette unit used in the liquid discharging device. The liquid discharging device contacts the conveying tube to the roller of the rotating body in the extended state, and uses the tension applied to the conveying tube by the roller to press the tube. The closed space in the tube is formed in the tube by the tension applied to the conveying tube without using the pressing body for holding the tube with the roller. When the rotating body is rotated in this state, the contacting position of the roller and the tube moves and the closed space moves accordingly, whereby the liquid present in the tube moves.

The tube cassette unit includes an introduction side pipe holding member for holding a plurality of relay pipes so as to be movable in the axis direction thereof, and a plurality of position adjustment mechanisms for individually adjusting the position in the axis direction of the relay pipes with respect to the introduction side pipe holding member, where the position of the relay pipes with respect to the introduction side pipe holding member is adjusted by the position adjustment mechanism. The amount of liquid conveyed through the conveying tubes are thereby adjusted for each conveying tubes. In other words, since the tension applied to the relevant tubes change thereby changing the inner diameter of the conveying tube involved in the pulling force by adjusting the relative position of the relay pipes and the introduction side pipe holding member, and thus the conveying amount of the liquid by the press-rolling action of the rollers can be adjusted.

The 21st aspect of the present invention provides the tube cassette unit of the 20th aspect, wherein the relay pipe includes a flange part arranged projecting to a periphery at an intermediate position in the axis direction;
the introduction side pipe holding member includes a through hole in which the relay pipe is fitted; and
the position adjustment mechanism includes a screw hole arranged at the flange part or at a position facing the flange part of the introduction side pipe holding member, and an adjustment screw screwed into the screw hole to adjust a distance between the flange part and the introduction side pipe holding member in the axis direction.

The 22nd aspect of the present invention provides the tube cassette unit of the 20th aspect, wherein
the discharge nozzle includes a contacting part for contacting to the discharge side holding part at the intermediate position in the axis direction; and
the discharge side holding part includes a plate shaped discharge side pipe holding member including a through hole with which the discharge nozzle is fitted, and a fixing member for fixing the discharge nozzle in an inserted state until the contacting part of the discharge nozzles contacts the discharge side pipe holding member.

In the above aspects, the contacting part may be of any shape as long as it contacts the discharge side pipe holding member so that the discharge nozzles do not pass through the through hole of the discharge side pipe holding member, and positions the relative position of the discharge nozzles and the discharge side pipe holding member constant. Specifically, the collar shaped member projecting to the periphery or members of circular cone shape, pyramid shape and the like configured to a tapered shape may be used as the contacting part.

The 23rd aspect of the present invention provides the tube cassette unit of the 22nd aspect, wherein the contacting part is constructed as a flange part arranged so as to contact a surface facing the introduction side holding part of the discharge side pipe holding member.

The 24th aspect of the present invention provides a tube cassette unit according to any one of the 20th to 23rd aspects, wherein the plurality of discharge nozzles is arranged at a pitch same as or at a pitch integral multiples of a pitch of the adjacent wells of the microtiter plate.

### Effects of the Invention

According to the first aspect of the present invention, the closed space is formed in the tube by winding the conveying tube on at least two rollers of the rotating body in the extended state, and pressing and squashing the tube with the tension applied on the tube and the relevant rollers. Therefore, the tube does not need to be sandwiched with the rollers and the pressing body to be constricted and squashed, whereby the opposing side of the roller can be released as the conveying tube attachment and detachment space at the contacting positions of the tube and the rollers. Thus, the tube can be detached from the rollers by simply detaching the tube from the tube cassette attachment unit when changing the tube. Therefore, the trouble in changing the tube is greatly saved.

The tube can be visually recognized from the outside since the pressing body is unnecessary. In particular, the tube can be recognized, and a check can be made if the liquid is being conveyed through the tube in the case of the multi-channel using a plurality of tubes.

According to the third aspect of the present invention, the conveyance of the liquid becomes smooth since the closed spaces for holding the liquid conveyed by the tube are arranged in pluralities.

According to the fourth aspect of the present invention, the conveying tube is reliably held by the holding part without being closed since both ends of the conveying tube are connected to pipe bodies, and the conveying tube is held while being coupled to the relevant pipe bodies.

According to fifth and sixth aspects of the present invention, the pipe body is held with a simple configuration with the pipe holding member for holding the pipe body, and the pipe body and the conveying tube are reliably coupled with a simple configuration, whereby the conveying tube wound to the at least two rollers of the rotating body in the extended state can be prevented from detaching from the first and second pipe bodies.

According to the seventh aspect of the present invention, the position in the axial direction of the first pipe body with respect to the introduction side holding part can be adjusted, and the amount of liquid conveyed through the conveying tube can be adjusted. In other words, when the length of the conveying tube varies due to manufacturing error or assembly error, or when the conveying tube deforms with time as it is wound to the roller in the extended state, the tension of the conveying tube sometimes changes, in which case, the amount of conveying liquid may not be constant. To this end, the relative position of the first pipe body and the introduction side holding member is adjusted to adjust the tension applied to the relevant conveying tube and adjust the conveying amount of the liquid. Therefore, the amount of liquid to be conveyed is made constant even if the tension of the conveying tube changes due to manufacturing error or deformation with time of the conveying tube. Furthermore, since the first pipe body is configured as a member independent from the introduction side pipe holding member, only the pipe body needs to be changed when the first pipe body is broken etc., thereby saving the trouble in changing.

According to the eighth aspect of the present invention, the distance between the flange part and the introduction side pipe holding member, that is, the position of the first pipe body with respect to the introduction side pipe holding member can be adjusted with a simple configuration of the adjustment screw arranged between the flange part and the introduction side pipe holding member.

According to the 11th embodiment of the present invention, the liquid can be discharged by simultaneously using a plurality of the conveying tubes, which tubes are unitized as the tube cassette unit, and thus a plurality of tubes can be attached and detached all at once by simply attaching or detaching the holding parts of the introduction side and the discharge side even with the multi-channel including a plurality of tubes. Therefore, the trouble required in changing the tube of the conveying device of multi-channel is reduced.

According to 12th and 13th aspects of the present invention, the rollers are arranged parallel to the rotating axis, and thus all the conveying tubes contact the rollers with an even force, and the liquid can be fed to all the conveying tubes with the same condition.

According to the 14th aspect of the present invention, the distance the closed space, which is formed by the rollers, moves can be controlled by controlling the rotation angle of the rotating body. Therefore, the amount of conveying liquid accumulated in the closed space can be controlled by controlling the rotation angle of the rotating body, and thus is suitably used even in apparatuses that aim to convey the a predetermined amount of liquid.

According to the 15th aspect of the present invention, a plurality of the conveying tubes can be attached to the liquid discharging device all at once, and thus the trouble required in changing the tube is reduced.

According to the tube cassette unit of the 16th aspect of the present invention, the liquid can be discharged all at once to the wells in the same column with one discharging operation since the discharge nozzles are arranged at the pitch same as the wells of the microtiter plate. If the discharge nozzles are arranged at a pitch of integral multiples of the wells of the microtiter plate, after discharging to the wells in the same column, the microtiter plate is shifted in the column direction by the relevant amount of pitch, and then the liquid is discharged, so that the liquid is discharged to all the wells in one column with a few number of times. The microtiter plate of different pitch can be responded by changing the tube cassette unit, and thus the trouble of position adjusting the discharge nozzles on the device side due to the type of microtiter plate is reduced.

According to the tube cassette unit of the 17th aspect of the present invention, the relay pipes or the discharge nozzles are held with a simple configuration with a plate shaped pipe holding member for holding the relay pipes or the discharge nozzles, and the relay tubes or the discharge nozzles are reliably coupled with the conveying tube with a simple configuration, thereby preventing the conveying tube wound to the at least two rollers of the rotating body in the extended state from slipping out from the relay pipes or the discharge nozzles.

According to the tube cassette unit of the 18th aspect of the present invention, the through hole formed in the coupling member is configured with the insertion surface on the pipe holding member side made to a wide diameter, and thus the friction acting with the conveying tubes in assembling the coupling member and the pipe holding member is reduced, the shift of the inserting part to the relay pipes or the discharge nozzles of the conveying tubes are prevented, thereby facilitating the assembly, and further, the discharge nozzles or the relay pipes and the conveying tubes are reliably coupled since the inner diameter dimension of the back surface is configured to be substantially the same as the outer diameter dimensions of the relay pipes or the discharge nozzles after assembly.

According to the tube cassette unit of the 19th aspect of the present invention, since the plurality of the conveying tubes must be simultaneously pulled, the introduction side holding member can be attached to the liquid discharging device with the conveying tubes in a reliably pulled state by holding the griping part and pulling the introduction side holding member.

According to the 20th aspect of the present invention, the position of the relay pipes serving as the first pipe body with respect to the introduction side holding part is adjusted, and the amount of the liquid conveyed through the conveying tubes are adjusted. That is, when the length of the conveying tube varies due to manufacturing error or assembly error, or when the conveying tube deforms with time as it is wound to the roller in the extended state, the tension of the conveying tubes sometimes changes, in which case, the amount of conveying liquid may not be constant. To this end, the relative position of the first pipe body and the introduction side holding member is adjusted to adjust the tension applied to the relevant conveying tube and to adjust the conveying amount of the liquid. Therefore, the amount of liquid to be conveyed is made constant even if the tension of the conveying tubes changes due to manufacturing error or deformation with time of the conveying tube. Furthermore, since the first pipe body is configured as a member independent from the introduction side pipe holding member, only the pipe body needs to be changed when the first pipe body is broken etc., thereby saving the trouble in changing.

According to the 21st aspect of the present invention, the positions of the relay pipes with respect to the introduction side holding part are adjusted with a simple configuration by the adjustment screws that screw-fits into a screw hole formed in the flange part or the introduction side pipe holding member.

According to the 22nd aspect of the present invention, since the discharge nozzles are fitted in until the contacting part of the discharge nozzles contact the discharge side pipe holding member, the relative position of the discharge side pipe holding member and the discharge nozzles are always made constant. In particular, the discharging conditions are made constant since the height of the discharge nozzles is made constant. Furthermore, only the broken discharge nozzle needs to be changed when the discharge nozzle is broken etc. since the discharge nozzle is configured with a member independent from the discharge side pipe holding member, and thus the trouble in changing is saved.

According to the 23rd aspect of the present invention, since the fit-in direction of the discharge nozzle to the discharge side pipe holding member and the fit-in direction of the relay pipes to the introduction side pipe holding member are the same, the pipe body may be fitted in from a constant direction and fixed at an appropriate position when inserting the respective pipe body to the discharge side pipe holding member and the introduction side pipe holding member. That is, since the relay pipes and the discharge nozzles are fixed at the appropriate position by passing the discharge nozzle from the through hole of the introduction side pipe holding member through the through hole of the discharge side pipe holding member, and inserting the relay pipes to the through hole of the introduction side pipe holding part, the attachments thereof are facilitated, and change is facilitated when the conveying tube or the pipe body is broken etc.

According to the 24th aspect of the present invention, a liquid is discharged at once to the wells of the same column with one discharging operation since the discharge nozzles are arranged at the same pitch as the wells of the microtiter plate. Furthermore, when the discharge nozzles are arranged at the pitch of integral multiples of the wells of the microtiter plate, after discharging to the wells of the same column, the microtiter plate is shifted in the column direction by the amount of the pitch, and the liquid is discharged, so that the liquid is discharged to all the wells of one column with a few number of times. The microtiter plate having different pitch can be responded by changing the tube cassette unit, and the trouble of position adjustment of the discharge nozzle on the device side due to type of microtiter plate is reduced.

### Brief Description of the Drawings

These and other aspects and features of the present invention will become clear from the following description taken in conjunction with the preferred embodiments thereof with reference to the accompanying drawings, in which:
Fig. 1 is a schematic view of an outer appearance of a liquid dispensing apparatus equipped with a tube cassette unit of the present invention;
Fig. 2 is a partial cross sectional view of the liquid dispensing apparatus of Fig. 1;
Fig. 3A is a plan view showing a configuration of a discharge driving mechanism used in the liquid dispensing apparatus of Fig. 1;
Fig. 3B is a side view of the discharge driving mechanism of Fig. 3A;
Fig. 4 is a block configuration view of a drive control circuit of the liquid dispensing apparatus of Fig. 1;
Fig. 5A is a process chart showing an operation of when the liquid dispensing apparatus of Fig. 1 discharges the liquid;
Fig. 5B is a process chart showing the operation of when the liquid dispensing apparatus of Fig. 1 discharges the liquid;
Fig. 5C is a process chart showing the operation of when the liquid dispensing apparatus of Fig. 1 discharges the liquid;
Fig. 5D is a process chart showing the operation of when the liquid dispensing apparatus of Fig. 1 discharges the liquid;
Fig. 6 is a plan view showing a configuration of the tube cassette unit used in the liquid dispensing apparatus of Fig. 1;

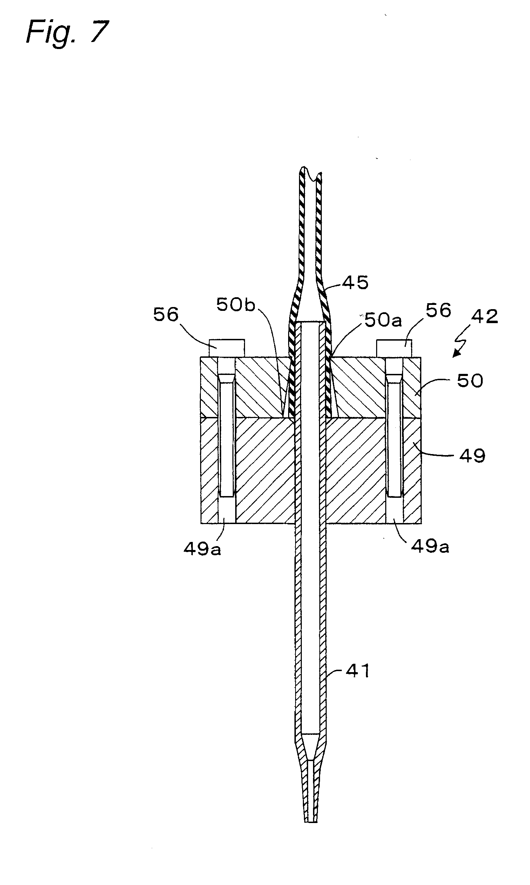

Fig. 7 is a partial cross sectional view showing a configuration of a discharge side holding part of the tube cassette unit of Fig. 6;
Fig. 8 is a partial cross sectional view showing a configuration of an introduction side holding part of the tube cassette unit of Fig. 6;
Fig. 9 is a partial cross sectional view showing a configuration of a third holding part of the tube cassette unit of Fig. 6;
Fig. 10 is a plan view showing another configuration of a tube cassette unit used in the liquid dispensing apparatus of Fig. 1;
Fig. 11A is a partial cross sectional view showing a configuration of a discharge side attachment part of the tube cassette unit of Fig. 10;
Fig. 11B is a partial cross sectional view showing a configuration of an introduction side attachment part of the tube cassette unit of Fig. 10;
Fig. 12A is an assembly exploded view of the discharge side attachment part of the tube cassette unit of Fig. 10;
Fig. 12B is an assembly exploded view of the introduction side attachment part of the tube cassette unit of Fig. 10;
Fig. 13A is a partially enlarged perspective view of the discharge side attachment part of the tube cassette unit of Fig. 10;
Fig. 13B is a partially enlarged perspective view of the introduction side attachment part of the tube cassette unit of Fig. 10;
Fig. 14 is a perspective view showing an attachment configuration of the discharge side attachment part of the liquid dispensing apparatus of Fig. 1;
Fig. 15 is a perspective view showing an attachment configuration of the introduction side attachment part of the liquid dispensing apparatus of Fig. 1;
Fig. 16A is a view showing an attachment configuration of a rotating body of the liquid dispensing apparatus of Fig. 1;
Fig. 16B is a perspective view showing a configuration of the rotating body of Fig. 12A;
Fig. 17 is a process chart of the steps for attaching the tube cassette unit to the tube cassette attachment unit;
Fig. 18 is a process chart of the steps for attaching the tube cassette unit to the tube cassette attachment unit;
Fig. 19 is a process chart of the steps for attaching the tube cassette unit to the tube cassette attachment unit;
Fig. 20 is a plan view showing a state in which the tube cassette unit is attached to the tube cassette attachment unit;
Fig. 21 is a view showing a state of the rotating body immediately after attaching the tube cassette unit to the tube cassette attachment unit;
Fig. 22 is a view showing a state in which the rotating body is rotated and the liquid is conveyed to the conveying tube;
Fig. 23 is a view explaining a state in which the rotating body is further rotated and the liquid is introduced into a closed space formed in the conveying tube;
Fig. 24 is a view explaining a state in which the rotating body is further rotated and the closed space introduced with the liquid is released; and
Fig. 25 is a view showing a state in which the rotating body is further rotated, the closed spaces are continuously released and the liquid is discharged from the discharge nozzle.

### Best Mode for Carrying out the Invention

The liquid conveying device according to a first embodiment of the present invention will now be described with reference to the drawings. Before the description of the present invention proceeds, it is to be noted that like parts are designated by like reference numerals throughout the accompanying drawings.

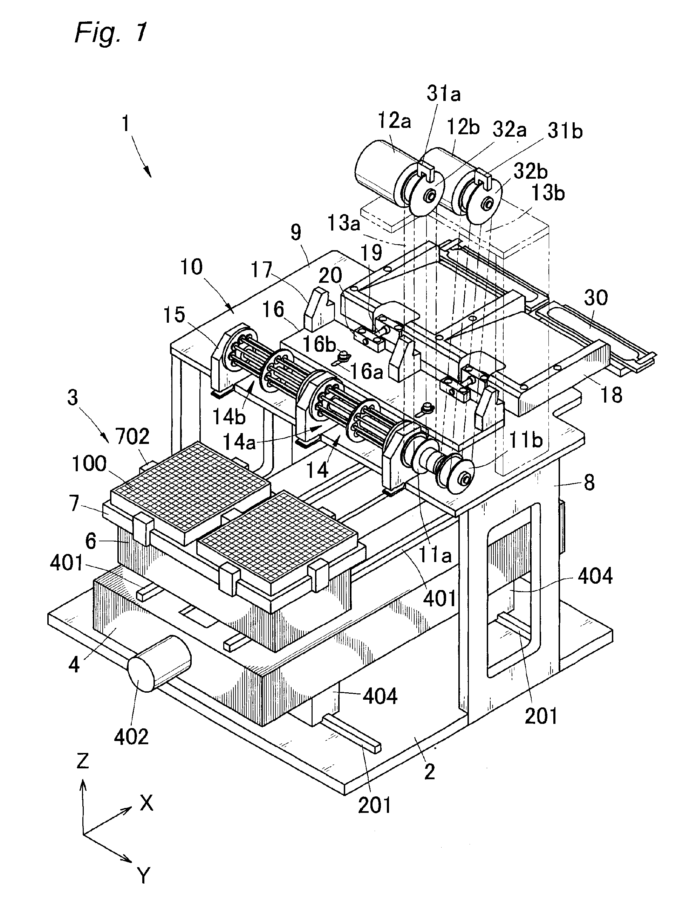

Fig. 1 is a liquid dispensing apparatus using the liquid conveying device of the present invention. The liquid dispensing apparatus 1 is an apparatus that uses a tube cassette unit of the present invention for injecting a predetermined amount of liquid such as reagent to each well arranged in a microtiter plate. In Fig. 1, a state in which the tube cassette unit configuring one part of a device used with the relevant apparatus is not attached is shown to clearly show the configuration of the liquid dispensing apparatus main body. The liquid dispensing apparatus 1 includes a moving mechanism 3 arranged on a fixed body 2 for independently moving the microtiter plate in each direction of X, Y, Z and a discharge driving mechanism 10 for injecting a predetermined amount of reagent to each well of the microtiter plate.

The microtiter plate 100 is such in which wells or spaces for accommodating the discharged liquid are arrayed in pluralities in a lattice form. The microtiter plate has different number of wells depending on its type. For example, a plurality of types exists including that with a total of 96 wells with 12 rows of a column with 8 wells; that with a total of 384 wells with 24 rows of a column with 16 wells; and that with a total of 1536 wells with 48 rows of a column with 32 wells etc. The size for one well, that is, the pitch between adjacent wells is different in the microtiter plate having different number of wells. In the present embodiment, a case of using the microtiter plate with 16 wells in one column will now be described by way of example.

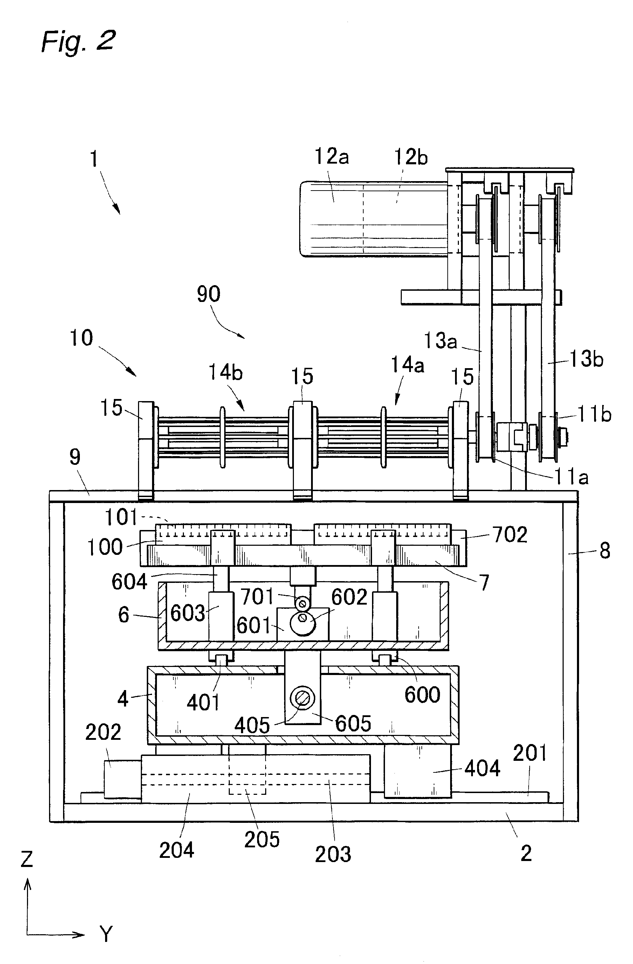

In Figs. 1 and 2, the moving mechanism 3 is configured by combining a Y-direction moving mechanism 204, an X-direction moving mechanism 4, and a mounting table raising and lowering mechanism 6 in the order from the bottom on the fixed table 2. Two Y-direction rails 201 are attached in parallel to the upper surface of the fixed table 2, and the slider 404 attached to the lower surface of the X-direction moving mechanism 4 is engaged to the Y-direction rails 201 in a freely sliding manner. In Fig. 2, the Y-direction moving mechanism 204 internally includes a Y-axis feed screw 203 rotated by the Y-axis motor 202, which Y-axis feed screw 203 is screwed into a nut 205 coupled to the lower surface of the X-direction moving mechanism 4. Therefore, when the Y-axis motor 202 is driven, the Y-axis feed screw 203 rotates, and the X-direction moving mechanism 4 moves in the Y-direction along the Y-direction rails 201.

In Fig. 1, two X-direction rails 401 parallel in the X-direction are attached to the upper surface of the X-direction moving mechanism 4, and sliders 600 attached to the lower surface of the mounting table raising and lowering mechanism 6 are engaged to the X-direction rails 401 in a freely sliding manner. The X-direction moving mechanism 4 internally includes an X-axis feed screw 405 rotated by the X-axis motor 402, which X-axis feed screw 405 is screwed into a nut 605 coupled to the lower surface of the mounting table raising and lowering mechanism 6 (see Fig. 2). Therefore, when the X-axis motor 402 is driven, the X-axis feed screw 405 rotates, and the mounting table raising and lowering mechanism 6 moves in the X-direction along the X-direction rails 401.

The mounting table raising and lowering mechanism 6 is a member having a bottomed container shape, and includes a Z-axis motor 601 and Z-axis guides 603 therein. The Z-axis motor 601 is coupled to an eccentric cam 602, and the coupling parts 604 of the mounting table 7 is inserted into have the mounting table 7 held in a freely movable manner in the Z-axis direction.

When the Z-axis motor 601 is driven and the eccentric cam 602 is rotated, the cam follower 701 of the mounting table 7 contacting the eccentric cam 602 moves, the Z-axis guides 603 guide the coupling parts 604 respectively inserted into the Z-axis guides 603, and the mounting table 7 moves in the Z-axis direction.

The mounting table 7 fixes two microtiter plates 100 lined in parallel. The mounting table 7 includes a positioning part 702 to fix the microtiter plate 100 at a predetermined position on the mounting table 7.

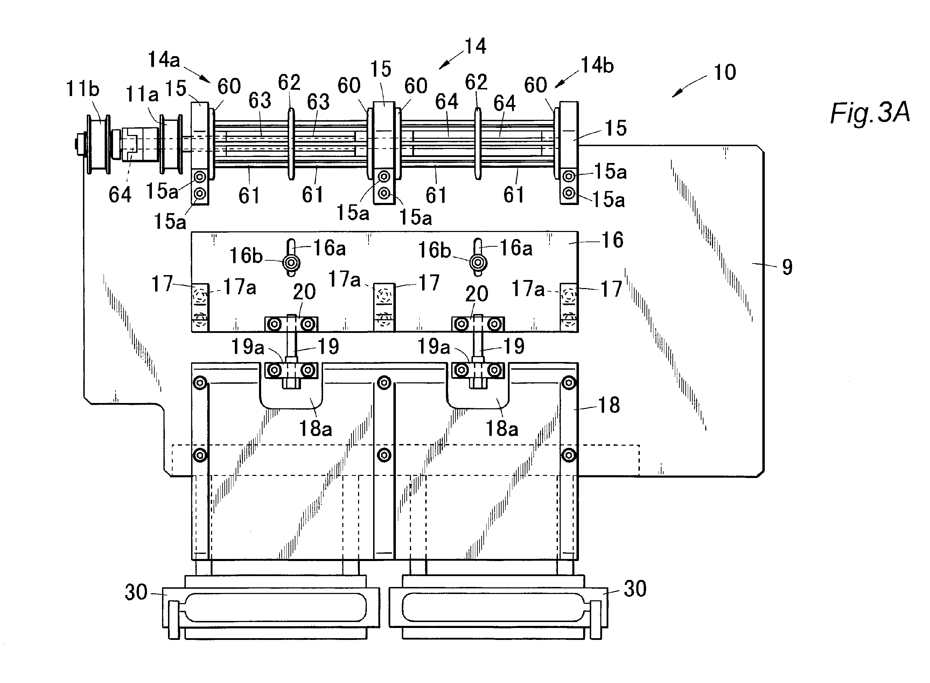

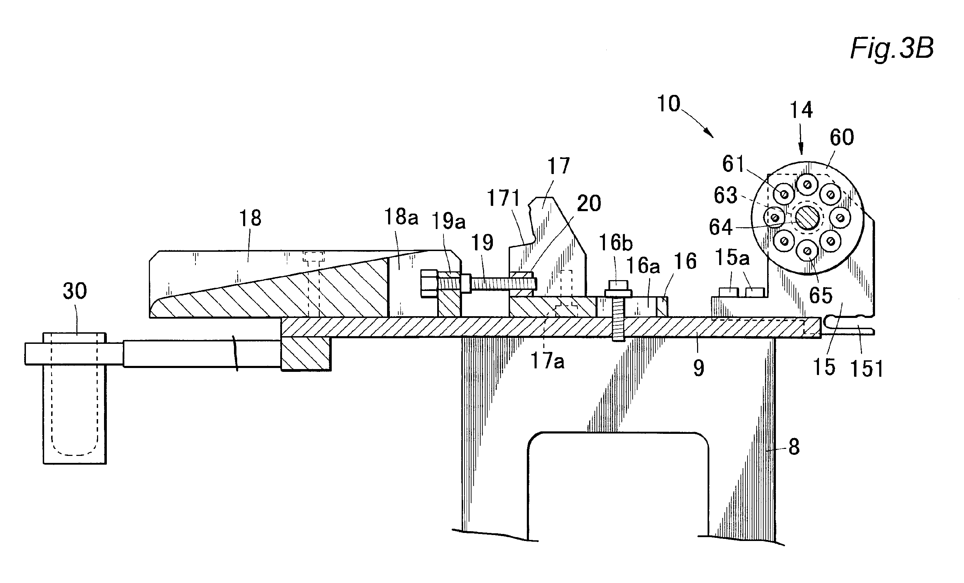

As shown in Fig. 3A and Fig. 3B, the discharge driving mechanism 10 is arranged on the fixing plate 9 positioned on the upper part of the moving mechanism, and includes a rotating body 14, a tube cassette attachment unit including a discharge side attachment part 15 and an introduction side attachment part 17, pump driving motors 12a, 12b for driving the rotating body 14, and a tube supporting plate 18. The rotating body 14 is configured to be rotatable with the lateral axis as the rotating axis, and is rotatably driven by the power from the pump driving motors 12a, 12b via pulleys 11a, 11b respectively arranged at the end of the rotating shafts. The upper region of the rotating body 14 is opened without being arranged with other members. This region is used as a tube cassette attachment and detachment region 90, used when attaching and detaching the tube cassette unit as hereinafter described, thereby facilitating the attachment and detachment of the tube cassette unit.

The pump drive motors 12a, 12b include porous circular discs 32a, 32b arranged on the driving shafts thereof, and are configured to detect and control the rotational amounts of the porous circular discs 32a, 32b by photo-interpreters 31a, 31b for detecting the rotational amounts of the porous circular discs 32a, 32b. That is, a plurality of holes arranged in the circumferential form are formed in each of the porous circular discs 32a, 32b, and the rotation angles of the pulleys are detected by counting the number of times the detection lights of the photo-interpreters 31a, 31b have been conducted or shielded by the holes. The rotations of the pulleys are transmitted to the pulleys 11a, 11b of the rotating body by the driving belts 13a, 13b, allowing the rotational amounts of the rotating body 14 to be detected.

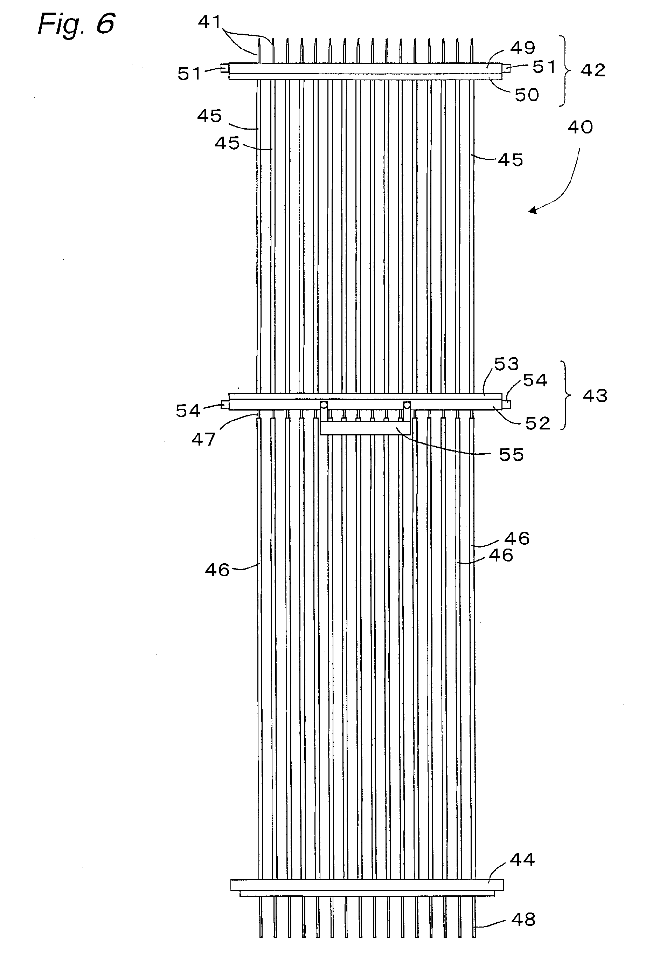

As hereinafter described in detail, the tube cassette attachment unit is a member for fixing the tube cassette unit (see Fig. 6), and includes introduction side attachment parts 17 and discharge side attachment parts 15. The discharge side attachment parts 15 are arranged lined at three locations so as to be parallel to the Y-axis at the front of the fixing plate 9, and holds the rotating shaft of the rotating body 14 and also holds the discharge side holding part 42 of the tube cassette unit, to be hereinafter described in detail.

The introduction side attachment parts 17 are fixed at three locations on the upper surface of the stationary plate 16 so as to be parallel to the Y-axis, and holds the introduction side holding part 43 of the tube cassette unit, to be hereinafter described in detail (see Fig. 6). The stationary plate 16 is arranged so as to be position adjustable in the X-axis direction with respect to the fixing plate 9 of the discharge driving mechanism 10. The positioning of the fixing plate 9 and the stationary plate 16 is performed by screws 16b that passes through two elongated holes 16a formed in the stationary plate 16 and two positioning screws 19.

The elongate holes 16a are through holes long in the X-axis direction that screw-fit to the screw holes (not shown) formed in the fixing plate 9 to fix the stationary plate 16. The positioning screws 19 are arranged so as to engage a screw fixing parts 19a arranged at the fixing plate and so as to have the axis thereof parallel to the X-axis direction. The positioning screws 19 screw-fit with screw fit-in parts 20 arranged behind the stationary plate 16, and the position of the stationary plate 16 is adjusted by the screw-in amount.

The tube supporting plate 18 supports the introducing tube of the tube cassette unit so that it does not sag in time of tube cassette unit attachment, and is a plate shaped body slanted with the backside being lower.

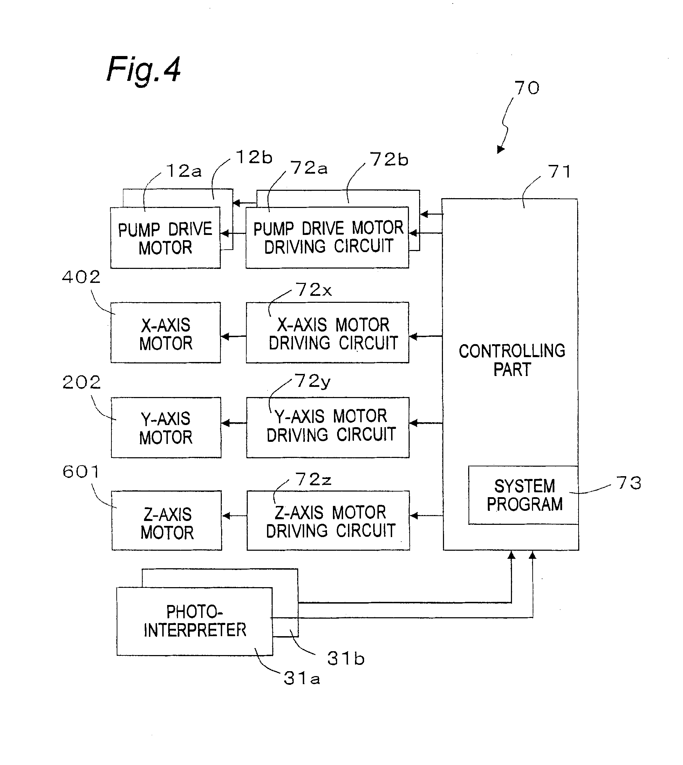

Fig. 4 is a block configuration view of a drive control circuit of the liquid dispensing apparatus according to the present embodiment. The drive control circuit 70 includes a controlling part 71 and motor driving circuits 72a, 72b, 72x, 72y, 72z for driving four types of motors, where the driving circuit 72a, 72b, 72x, 72y, 72z of the respective motors are controlled by the system program 73 stored in the controlling part 71 to independently drive control each motor. The controlling part 71 is connected to the photo-interpreters 31a, 31b mentioned above, and detects the rotational amount of the rotating body 14 when receiving the signal from the photo-interpreters 31a, 31b and drive controls the pump drive motors 12a, 12b through the pump drive motor driving circuits 72a, 72b.

The pump drive motors 12a, 12b are motors for rotating the rotating body 14 of the discharge driving mechanism as described above. The X-axis motor 402 is a motor for moving the second stage 6 in the X-axis direction. The Y-axis motor 202 is a motor for moving the first stage 4 in the Y-axis direction. The Z-axis motor 601 is a motor, arranged in the second stage, for moving the mounting table 7 up and down in the Z-axis direction.

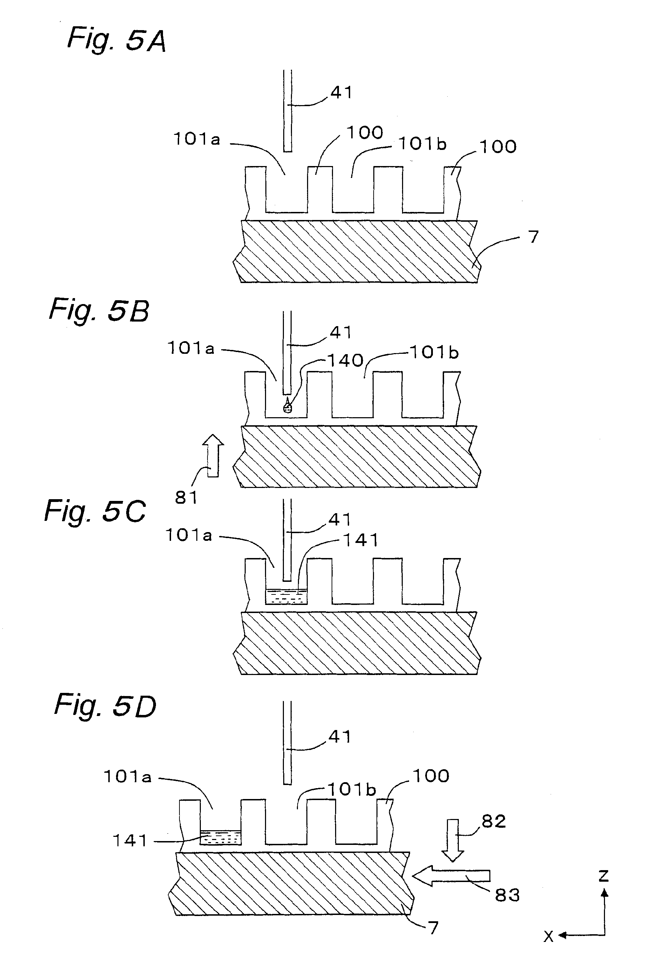

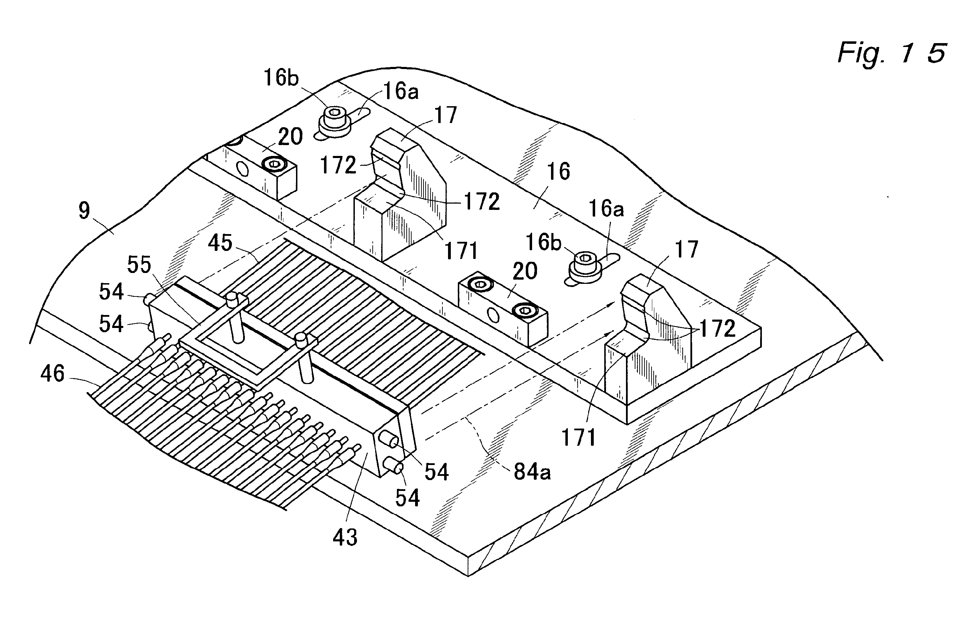

The liquid dispensing apparatus according to the present embodiment discharges a predetermined amount of liquid to each well arranged in the microtiter plate 100 from the discharge nozzle when the discharge driving mechanism 10 and the moving mechanism 3 are driven in conjunction. The discharge nozzle 41, hereinafter described in detail, is arranged in the tube cassette unit (see Fig. 6), and is arranged so that the discharge port is positioned downward in a substantially vertical direction when the tube cassette unit is attached (see Fig. 15). Specifically, the moving mechanism 3 is first moved so that the well column 101a arrayed in the Y-axis direction of the microtiter plate 100 is positioned below the discharge nozzle 41 for discharging the liquid, as shown in Fig. 5A.

Next, the Z-axis motor is driven to raise the mounting table 7 in the Z-axis direction as shown with an arrow 81 thereby approaching the well column 101a of the microtiter plate 100 to the discharge nozzle 41, and then the discharge driving mechanism 10 is driven to discharge a predetermined amount of liquid 140 from the discharge nozzle 41 (Fig. 5B). When a predetermined amount of liquid is discharged to the well column 101a (Fig. 5C), the Z-axis motor is driven to lower the mounting table 7 to the lower side in the Z-axis direction, and then the X-axis motor is driven (Fig. 5D) to move the microtiter plate 100 so that the next well column 101b is positioned under the discharge nozzle 41 of the discharge driving mechanism 10. A predetermined amount of liquid is discharged to all the wells of the microtiter plate 100 by repeatedly performing the above task.

Fig. 6 is a view showing a configuration of the tube cassette unit used in the liquid dispensing apparatus according to the present embodiment. The tube cassette unit 40 has a plurality of (16 in the present embodiment) conduit units arranged parallel to each other in one column, each of which includes a plurality of discharge nozzle 41, a conveying tube 45 having an end into which the discharge nozzle is inserted, a relay pipe 47 inserted into the other end of the conveying tube 45, an introducing tube 46 into which the other end of the relay pipe 47 is inserted, and a supply pipe 48 inserted into the other end of the introducing tube. In the present embodiment, the discharge nozzles 41, the relay pipes 47, and the supply pipes 48 are made of metal, and the conveying tubes 45 and the introducing tubes 46 used are made of silicon resin having flexibility.

The conduit unit forms a conduit of introducing a liquid to the conduit unit from the supply pipes 48 arranged so as to be immersed in a liquid stored in a liquid tank 30 (see Fig. 3A), and conveying and discharging a liquid through the introducing tubes 46, the relay pipes 47, the conveying tubes 45, and the discharge nozzles 41. Terms such as upstream side (side closer to supply pipes 48) and the downstream side (side closer to discharge nozzles 41) will be used in describing the positional relationship of the tube cassette unit.

The respective conduit unit is arranged coupled to each other so as to be at equal pitch from each other by a discharge side holding part 42 for fixing the discharge nozzles 41, an introduction side holding part 43 for fixing the relay pipes 47, and a third holding part 44 for fixing the supply pipes. The pitch of the adjacent conduit units is set to be equal to or to integral multiples of the pitch of the well column of the microtiter plate 100. In the tube cassette unit shown in Fig. 6, the relay pipes 47 corresponds to the first pipe body, and the discharge nozzles 41 corresponds to the second pipe body.

The conveying tubes 45 into which the discharge nozzles are inserted is a tube having flexibility and extensibility, where the outer diameter dimension is about 2.7φ, the inner diameter dimension is about 1.3 to about 1.7φ in the present embodiment. The performance demanded for the conveying tubes are not only flexibility and extensibility, but durability (durability and chemical resistance with respect to pressing by roller) are also required. The autoclave process (sterilizing process) is also required depending on the application. The silicon resin is used in the present embodiment in view of the above, but is not limited thereto.

The introducing tubes 46 respectively communicating with the conveying tubes 45 by ways of the relay pipes 47 are the same as that used for the conveying tubes 45 in the present embodiment. However, as will be described hereinafter, the introducing tubes 46 are attached to a liquid dispensing apparatus 1 in a no-tension applied state, and thus do not necessarily need to have flexibility, and a tube of arbitrary property may be used.

The discharge side holding part 42 includes a main body 49 (introduction side holding part) through which the discharge nozzles are passed for fixing the discharge nozzles, and a pressing plate 50, arranged superimposing the surfaces on the upstream sides of the discharge nozzles of the main body, for holding the conveying tubes 45 into which the discharge nozzles 41 are inserted while being coupled to the discharge nozzles 42. The pressing plate 50 includes through holes through which the discharge nozzles 41 and the conveying tubes 45 pass, and strongly couples them by pressing the conveying tubes 45 against the discharge nozzles with the walls of the through holes.

The hole diameter on the downstream side of the through holes are configured to be sufficiently larger than the outer diameter of the conveying tubes 45, and are configured so as to reduce the contacting area with the conveying tubes 45 and reduce the resistance in time of insertion of the pressing plate 50 when coupling the main body 49 and the pressing plate 50. Since the hole diameter of the through holes on the upstream side of the pressing plate 50 are configured to be slightly larger than the outer diameter dimension of the discharge nozzles and smaller than the outer diameter dimension of the conveying tube, the conveying tubes 45 are pressed against the exterior surface of the discharge nozzle by the upstream side end 50a of the through hole s when the main body 49 and the pressing plate 50 are coupled. Screws 56 screw-fit to a screw holes 49a formed in the main body 49 is used in coupling the main body 49 and the pressing plate 50.

As shown in Fig. 6, columnar projections 51 that engage with the discharge side attachment parts 15 are arranged at two locations on the left and the right at both surfaces in the Y-axis direction of the main body 49 (discharge side pipe holding member) of the discharge side holding part 42. The mechanism of engaging the discharge side attachment parts 15 and the discharge side holding part 42 will be hereinafter described in detail.

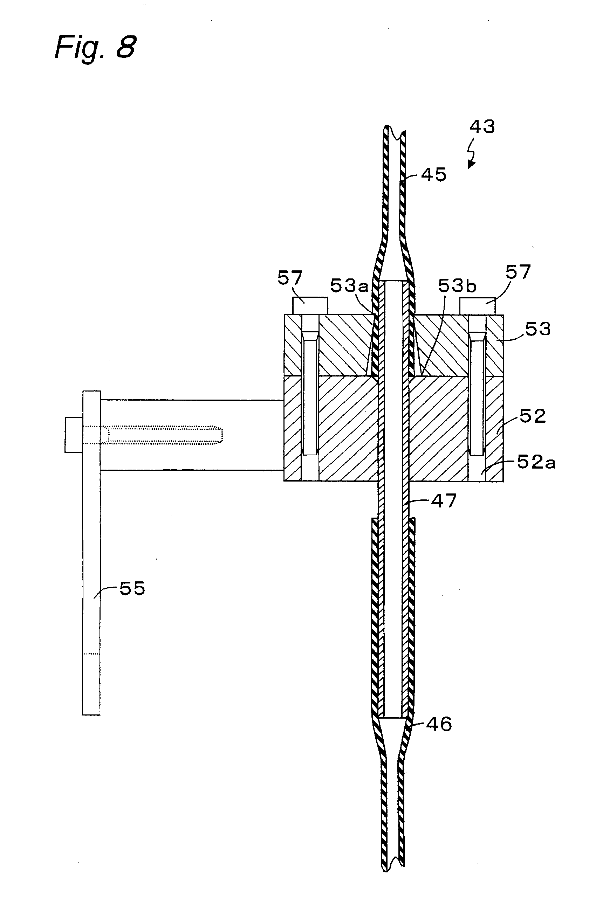

As shown in Fig. 8, the introduction side holding part 43 includes a main body 52 through which the relay pipes 47 is passed for fixing and a pressing plate 53, arranged superimposing the surface on the upstream side of the main body 52, for holding the conveying tube 45 into which the relay pipe 47 is inserted while being coupled to the relay pipe 47. The pressing plate 53 includes a through hole through which the relay pipe 47 and the conveying tube 45 pass through, and strongly couples them by pressing the conveying tube 45 against the relay pipe 47 with the wall of the through hole.

The hole diameter on the upstream side of the through hole is configured to be sufficiently larger than the outer diameter of the conveying tube 45, and is configured so as to reduce the contacting area with the conveying tube 45 and reduce the resistance in time of insertion of the pressing plate 53 when coupling the main body 52 and the pressing plate 53. Since the hole diameter of the through hole on the downstream side of the pressing plate 53 is configured to be slightly larger than the outer diameter dimension of the relay pipe 47 and smaller than the outer diameter dimension of the conveying tube, the conveying tube 45 is pressed against the exterior surface of the relay pipe 47 by the downstream side end 53a of the through hole when the main body 52 and the pressing plate 53 are coupled. A screws 57 screw-fit to a screw holes 52a formed in the main body 52 is used in coupling the main body 52 and the pressing plate 53. Since the introducing tube 46 inserted into the upstream side end of the relay pipe 47 is attached to a liquid dispensing apparatus 1 in a no-tension applied state as will be hereinafter described, a configuration of coupling the two is not arranged. However, a member for coupling the relay pipe 47 and the introducing tube 46 may be arranged.

As shown in Fig. 6, columnar projections 54 that engage with the introduction side attachment parts 17 are arranged at two locations on the left and the right at both surfaces in the Y-axis direction of the main body 52 of the introduction side holding part. The engagement mechanism of the introduction side attachment parts 17 and the introduction side holding part 43 will be hereinafter described in detail. A handle 55 for pulling the introduction side holding part 43 in time of attaching the tube cassette unit 40 is arranged at the central portion on the upper surface of the main body 52 of the introduction side holding part 43.

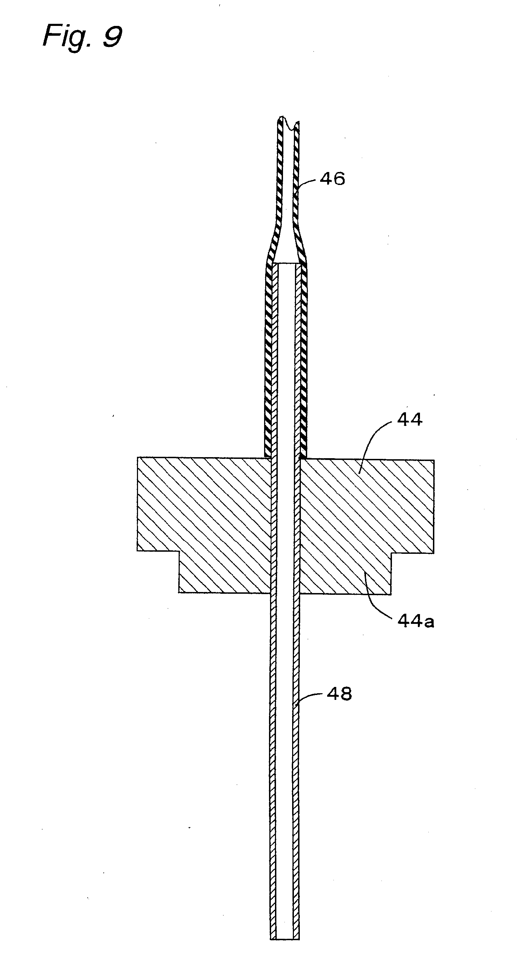

As shown in Fig. 9, the third holding part 44 is a plate shaped body through which the supply pipe 48 are passed for fixing. The upstream side surface of the third holding part 44 is arranged with an inserting part 44a for coupling with the liquid tank 30. The upstream side end of the introducing tube 46 is connected to the supply pipe 48, and a liquid conveyed through the supply pipe 48 is fed to the conveying tube.

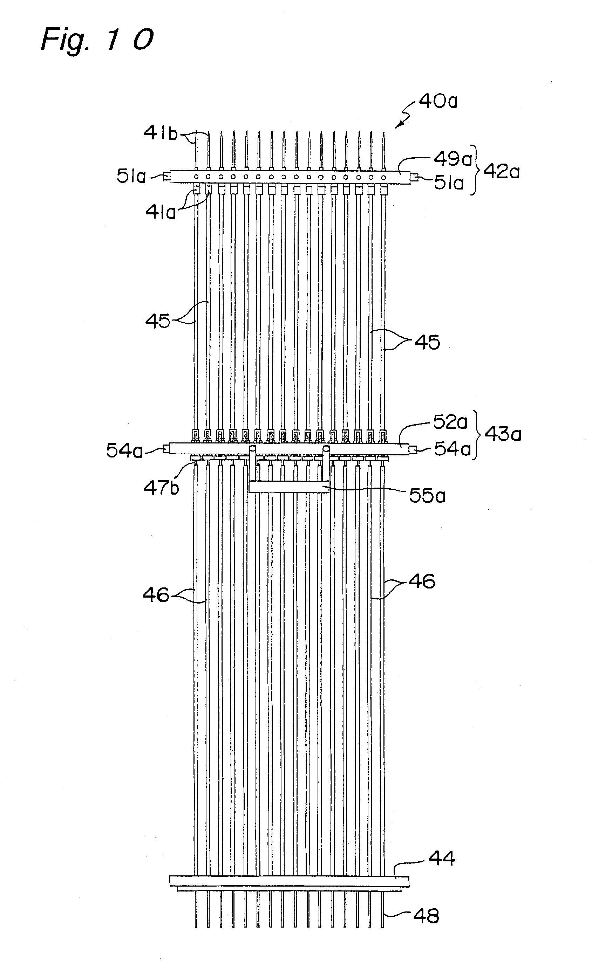

Other configuration examples of the tube cassette unit used in a liquid dispensing apparatus according to the present embodiment will now be described. Fig. 10 is a view showing another configuration example of the tube cassette unit used in a liquid dispensing apparatus according to the present embodiment. The tube cassette unit shown in Fig. 10 has a configuration common with the tube cassette unit shown in Fig. 6, and thus the difference will be mainly described below.

The tube cassette unit 40a has a plurality of (16 in the present embodiment) conduit units arranged parallel to each other in one column, each of which includes a plurality of discharge nozzles 41a, the conveying tubes 45 respectively communicating to the discharge nozzles 41a, a relay pipes 47a respectively inserted into the other end of the conveying tubes 45, the introducing tubes 46 into which the other end of the relay pipes 47a are inserted, and the supply pipes 48 inserted into the other ends of the introducing tubes. In the tube cassette unit shown in Fig. 10, the relay pipes 47a corresponds to the first pipe body, and the discharge nozzles 41a corresponds to the second pipe body.

The conduit unit forms a conduit of introducing a liquid from the supply pipes 48 arranged so as to be immersed in a liquid stored in the liquid tank 30 (see Fig. 3A) to the conduit unit, and conveying a liquid through the introducing tubes 46, the relay pipes 47a, the conveying tubes 45, and the discharge nozzles 41a.

The respective conduit unit is arranged coupled to each other so as to be at equal pitch from each other by a discharge side holding part 42a for fixing the discharge nozzles 41a, the introduction side holding part 43a for fixing the relay pipes 47a, and the third holding part 44 for fixing the supply pipes. The pitch of the adjacent conduit units is set to be equal to or to integral multiples of the pitch of the well column of the microtiter plate 100.

The conveying tubes 45 may be the same as that used for the tube cassette unit shown in Fig. 6. The introducing tubes 46 communicating with the conveying tubes 45 by way of the relay pipes 47a may be the same as that used for the tube cassette unit shown in Fig. 6.

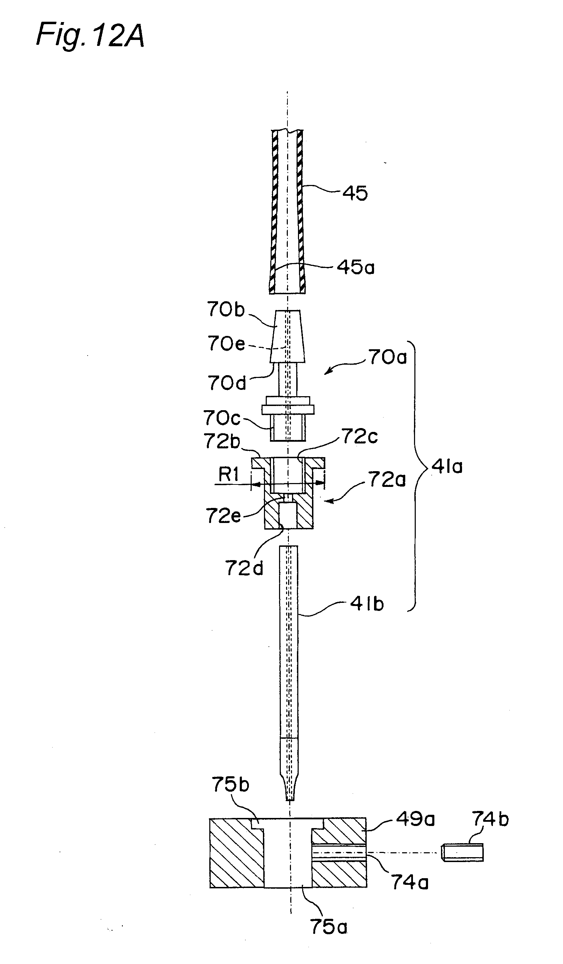

The discharge side holding part 42a includes a main body 49a serving as the discharge side pipe holding member for holding the discharge nozzles 41a, as shown in Fig. 11A and Fig. 12A. The discharge nozzles 41a are fixed to the main body 49a by being fitted into through holes 75a formed in the main body 49a.

The discharge nozzle 41a is configured by a holding part 70a for holding the conveying tube 45, a nozzle 41b and a cylindrical coupling part 72a. The coupling part 72a is fixed with the screw part 70c formed on the downstream side of the holding part 70a by being screw-fit into the screw hole 72c formed on the upstream side thereof, and also fixed with the nozzle 41b inserted into the fit-in hole 72d formed on the downstream side. The coupling part 72a also includes a through hole 72e passing from the screw hole 72c to the fit-in hole 72d. A flange part 72b projecting to the periphery is formed at the upstream side end of the coupling part 72a. The discharge nozzle 41a in which the holding part 70a, the coupling part 72a, and the nozzle 41b are coupled feeds a liquid introduced from the conveying tube 45 from the flow path 70e of the holding part 70a through the through hole 72e to the nozzle 41b.

The holding part 70a has an inserting part 70b formed on the upstream side for inserting the conveying tube 45. The inserting part 70b is a tubular member of circular cone shape configured so that the outer diameter gradually increases towards the downstream side, thereby holding the conveying tube so that it does not slip out by being closely attached to the inner surface 45a of the conveying tube. That is, since the conveying tube 45 deforms in such manner that the diameter thereof narrows when applied with tension, the close attachment with the inner surface 45a of the conveying tube becomes stronger with the inclined portion and the fold-back portion 70d of the inserting part 70b, thereby preventing the conveying tube 45 from slipping out from the holding part 70a.

The main body 49a is a plate shaped member including through hole 75a through which the coupling part 72a of the discharge nozzle 41a is inserted, and a screw hole 74a into which fixing screw 74b for fixing the discharge nozzle 41a is inserted. The through hole 75a is arrayed at a pitch equal to or at integer multiples of the pitch of the wells of the microtiter plate 100, and the discharge nozzle 41a and the main body 49a are held by fitting the discharge nozzle 41a into the through hole 75a. The through hole 75a allows the discharge nozzle 41a to be fitted in from the upstream side, and the relative position of the main body 49a and the discharge nozzle 41a to always be constant by fitting the discharge nozzle 41a into the through hole 75a to the far end since a flange fit-in part 75b that engages with the flange part 72b of the coupling part 72a is provided. Therefore, the height of a plurality of nozzles arranged in the tube cassette unit is always made constant. Furthermore, the discharge nozzle 41a fitted into the through hole 75a is fixed to the main body 49a by the fixing screw 74b.

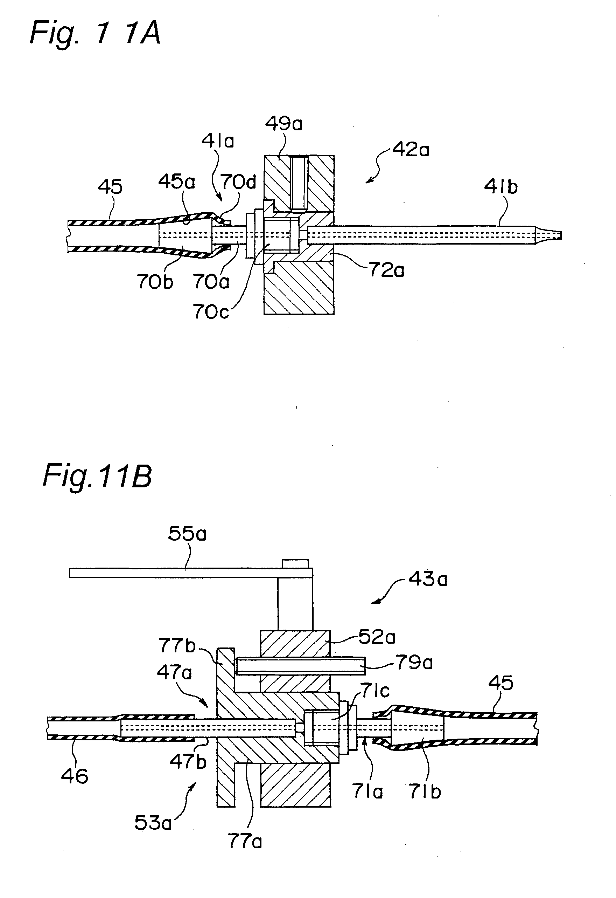

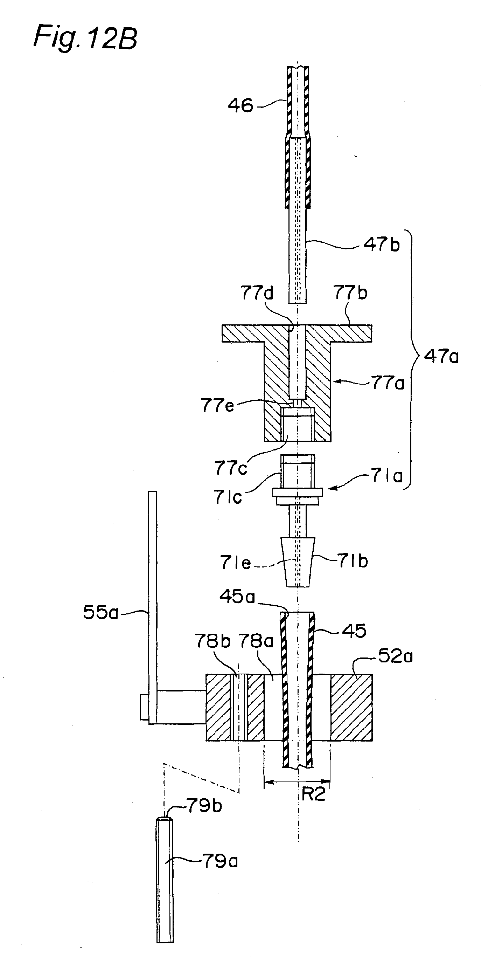

As shown in Fig. 11B and Fig. 12B, the introduction side holding part 43a includes a main body 52a serving as the introduction side pipe holding member for holding the relay pipe 47a, and an adjustment screw 79a functioning as a position adjustment mechanism for adjusting the position in the axis direction of the relay pipe 47a with respect to the main body 52a.

The relay pipe 47a is configured by a pipe 47b, a cylindrical coupling part 77a and a holding part 71a for holding the conveying tube 45. The relay pipe 47a is held by being fitted into a through hole 78a formed in the main body 52a in a state movable in the axis direction thereof.

The coupling part 77a is fixed with the pipe 47b inserted into the fit-in hole 77d formed on the upstream side thereof, and is fixed with the screw part 71c formed on the upstream side of the holding part 71a screwed into the screw hole 77c formed on the downstream side. The coupling part 77a has a through hole 77e passing from the fit-in hole 77d to the screw hole 77c. A flange part 77b that projects to the periphery is formed at the upstream side end of the coupling part 77a.

The holding part 71a has an inserting part 71b to be inserted into the conveying tube 45 arranged on the downstream side. The inserting part 71b is formed into a shape same as the inserting part 70b of the holding part 70a of the discharge nozzle 41a and prevents the conveying tube 45 from slipping out. Furthermore, the flow path 71e for conveying liquid is formed along the center axis of the holding part 71a. The relay pipe 47a in which the pipe 47b, the coupling part 77a, and the conveying tube 45 are coupled feeds a liquid introduced from the pipe 47b from the through hole 77e through the flow path 71e of the holding part 71a to the conveying tube 45.

The main body 52a is a plate shaped member including a through hole 78a to be fitted with the coupling part 77a of the relay pipe 47a and a screw hole 78b into which an adjustment screw 79a for adjusting the position of the relay pipe 47a is inserted. The through hole 78a is arrayed at the same pitch as the through hole 75a of the main body 49a of the discharge side holding part, and the relay pipe 47a and the main body 52a are held by fitting the relay pipe 47a into the through hole 78a. The through hole 78a is fitted with the relay pipe 47a from the upstream side and has a diameter smaller than the flange part 77b, and thus holds the relay pipe 47a without being completely passed through.

The adjustment screw 79a is screw-fit to the screw hole 78b arranged parallel to the through hole 78a in the vicinity of the through hole 78a. The adjustment screw 79a is configured longer than the thickness dimension of the main body 52a so as to project to both surfaces of the main body 52a, where the distal end 79b projecting on the upstream side surface of the main body 52a contacts the flange part 77b of the coupling part 77a. The fit-in width of the relay pipe 47a to the main body 52a, that is, the position in the axial direction of the relay pipe 47a with respect to the main body 52a is determined by the projecting amount of the distal end of the adjustment screw 79a that contacts the flange part 77b. Therefore, the adjustment of the fit-in width is more finely performed by reducing the screw pitch of the adjustment screw 79a, and is about 0.3mm in the present embodiment. The amount of adjustment of the fit-in width differs among specific designs of the device, but is preferably adjusted in the range of between 1 and 10mm, more preferably of about 3mm. In the present embodiment, the adjustment screw 79a and the screw hole 78b become the positional adjustment mechanism for adjusting the position in the axial direction of the relay pipe 47a with respect to the main body 52a.

The screw hole may be formed on the flange part 77b side instead of the main body side 52a, in which case the distal end of the screw projecting to the downstream side of the flange part contacts the upstream side surface of the main body 52a, thereby adjusting the fit-in amount of the relay pipe and the main body 52a.

In the tube cassette unit of such configuration, the fit-in width of the relay pipe 47a can be adjusted by the adjustment screw 79a, and the variation in the discharging amount of the liquid among the conduit units may be adjusted by such adjustment. That is, the tube cassette unit shown in Fig. 10 is set in the dispensing apparatus, a predetermined amount of liquid is discharged, and the discharging amount of the liquid for each conduit unit is measured. The error in the discharging amount is obtained for each conduit unit based on the measurement result, the projecting amount of the adjustment screw 79a is adjusted based on the error, and the fit-in width of the relay pipe 47a is adjusted. Since the relationship between the rotation angle of the adjustment screw 79a and the amount of change in the discharging amount of each conduit unit is uniquely determined, the discharging amount is adjusted with reference to the data measured in advance.

When increasing the discharging amount of the conduit unit, the projecting amount of the adjustment screw 79a is reduced, the fit-in width of the relay pipe 47a is increased, and the conveying tube 45 is adjusted in the loosening direction. That is, as the tension of the conveying tube 45 lowers and the pressing force of the roller 61 and the conveying tube 45 weakens, a closed space 110 becomes larger and the discharging amount per rotation angle of the rotating body 14 increases.

On the other hand, when reducing the discharging amount of each conduit unit, the projecting amount of the adjustment screw 79a is increased, the fit-in width of the relay pipe 47a is reduced, and the conveying tube 45 is adjusted in the extending direction. As the tension of the conveying tube 45 thereby increases and the pressing force of the roller 61 and the conveying tube 45 becomes stronger, the closed space 110 becomes smaller and the discharging amount per rotation angle of the rotating body 14 decreases.

The procedures for attaching the relay pipes 47a and the discharge nozzles 41a to the main body 52a of the introduction side holding part 43a and the main body 49a of the discharge side holding part 42a, respectively, in the tube cassette unit shown in Fig. 10 will now be described.

As described above, first the relay pipes 47a and the discharge nozzles 41a are coupled with the conveying tubes, and this is formed for the number (16 in the present embodiment) to be set in one tube cassette unit. The coupled relay pipe 47a and the discharge nozzle 41a are inserted into the through hole 78a of the main body 52a of the introduction side holding part 43a from the nozzle 41b side. The outer dimension R1 of the flange part 72b of the coupling part 72a of the discharge nozzle 41a is formed smaller than the inner dimension R2 of the through hole 78a of the main body 52a of the introduction side holding part, thereby allowing the discharge nozzle 41a to pass through the introduction side holding part 43a.

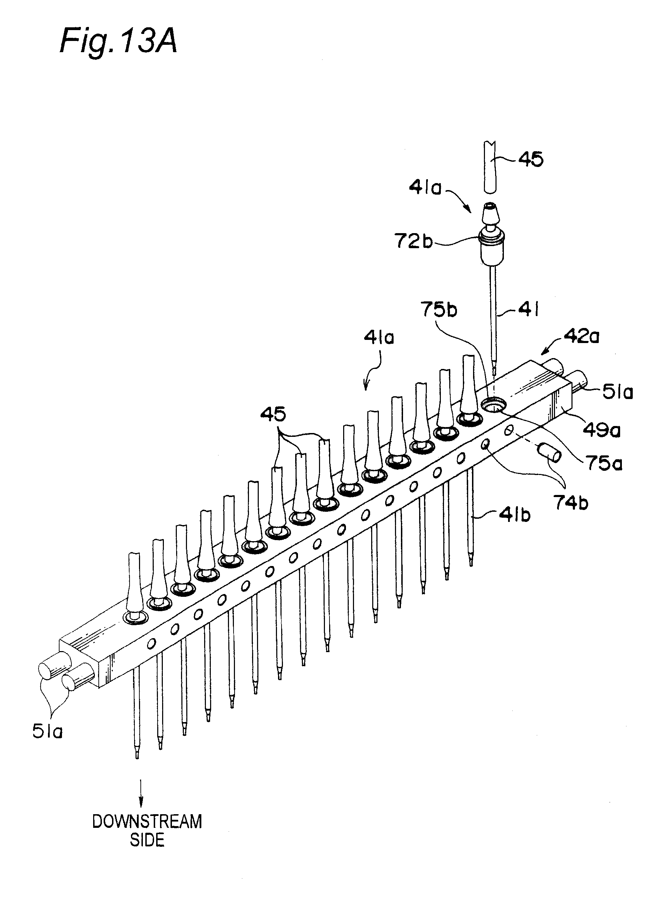

Next, as shown in Fig. 13A, the discharge nozzles 41a are fitted into the through holes 75a of the main body 49a of the discharge side holding part 42a and the discharge nozzles 41a are fixed to the main body 49a of the discharge side holding part 42a with the fixing screws 74b.

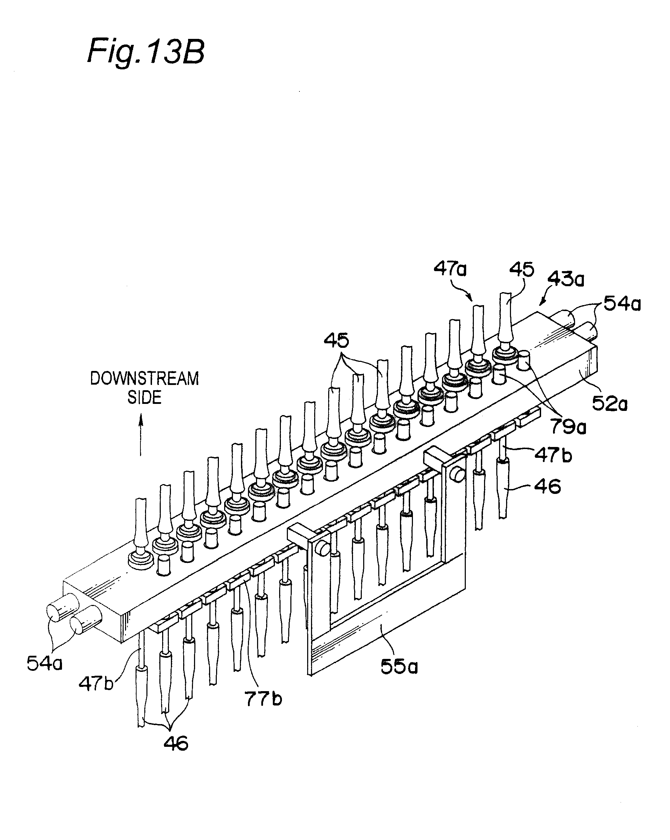

As shown in Fig. 13B, the relay pipes 47a are then fitted into the through holes 78a of the main body 52a of the introduction side holding part 43a. Each of the relay pipe 47a has the flange part 77b of the coupling part 77a configured larger than the through hole 78a and thus cannot pass through the through hole 78a, and is fitted in until the flange part 77b contacts the distal end of the adjustment screw 79a as described above. The conveying tubes 45 are set in the pulled state when attached to the device 1, and thus the relay pipes 47a do not slip off from the main body 52a of the introduction side holding part 43a.

Such operations are repeated to set the nozzles for the number necessary for the introduction side holding part 43a and the discharge side holding part 42a. By assembling the tube cassette unit in this manner, the power to assemble the tube cassette unit is saved, and only the broken discharge nozzle can be changed without detaching the other conveying tubes if only one part of the plurality of discharge nozzles is broken.

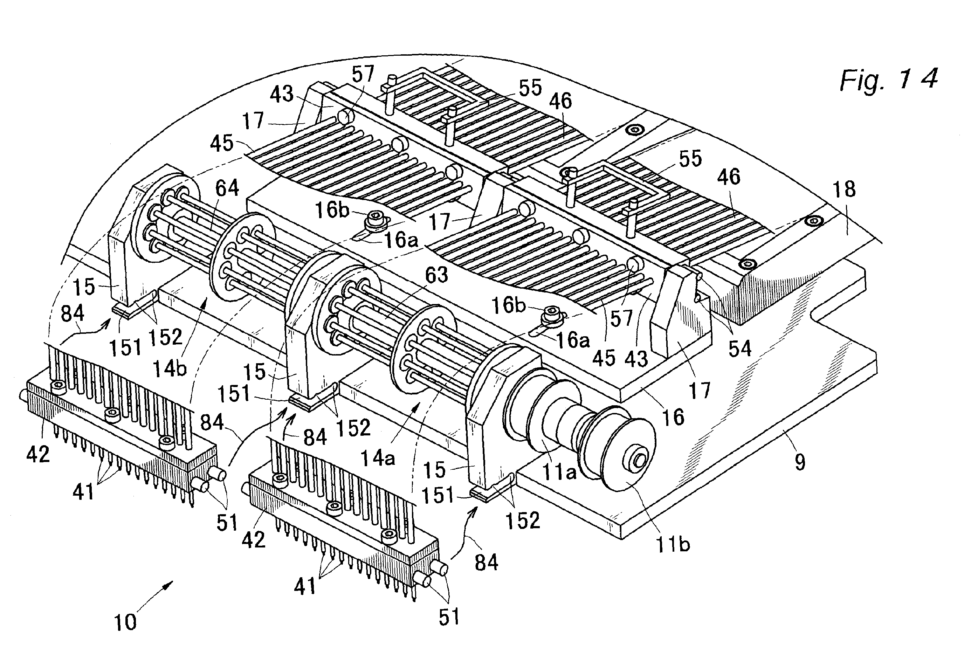

The mechanism of engaging the introduction side attachment parts 17 and the discharge side attachment parts 15 to the introduction side holding parts 43, 43a, and the discharge side holding parts 42, 42a will now be described. A case of engaging the tube cassette unit of Fig. 6 will be described by way of example, but the tube cassette unit shown in Fig. 10 may be used. Fig. 14 is a perspective view describing the engagement mechanism of the discharge side attachment part 15 and the discharge side holding part 42. The discharge side attachment parts 15 are fixed parallel to each other with one part projecting to the front side of the fixing plate, as shown in Fig. 14. The discharge side attachment parts 15 are fixed to the fixing plate with the screws 15a. The distance between the adjacent introduction side attachment parts 17 is made to be substantially the same as the width dimension of the introduction side holding part, and the rotating body 14 (14a, 14b) is arranged between the two adjacent discharge side holding parts 15, as described above. A cut-out 151 extending in the X-axis direction is formed at the lower part from the rotating body installing position of the discharge side attachment parts 15, and the projections 51 of the discharge side holding part are fitted into the cut-outs 151. Concave parts 152 having a shape substantially the same as the outer peripheral shape of the projections 51 are formed at two locations on the upper surface of the cut-outs 151 at the positions corresponding to the projections 51 of the discharge side holding parts 15 when engaging the two, the two parts being fixed when the projections 51 fit into the concave parts 152 in coupling, as shown with an arrow 84.

The introduction side attachment parts 17 and the introduction side holding part 43 engage with the engagement mechanism shown in Fig. 15. That is, the introduction side attachment parts 17 are fixed spaced apart at a predetermined distance on the stationary plate 16 as described above. The distance between the adjacent introduction side attachment parts 17 is made to be substantially the same as the width dimension of the introduction side holding part 43. The introduction side attachment parts 17 include cut-outs 171 for engaging the introduction side holding part 43 on the surface on the side distant from the discharge side attachment parts 15, and the two are fixed by fitting the introduction side holding part 43 into the cut-outs 171. The cut-outs are arranged in a direction the engagement surfaces 173 of the introduction side attachment part side are inclined, which inclining direction is a direction such that the downstream side (rotating body 14 side) end of the relay pipe 47 of the introduction side holding part is arranged inclined so as to be at the upper position. Concave parts 172 having a shape substantially the same as the outer peripheral shape of the projections 54 are formed at two locations on the engagement surface 173 at positions corresponding to the projections 54 of the introduction side holding part when engaging the two, and the projections 54 are fitted into the concave parts 172 in coupling, as shown with the arrow 84a. The introduction side holding part 43 is biased to the engagement surfaces 173 of the introduction side attachment parts 17 by the conveying tubes 45 in the extended state and securely fixed, as will be hereinafter described.

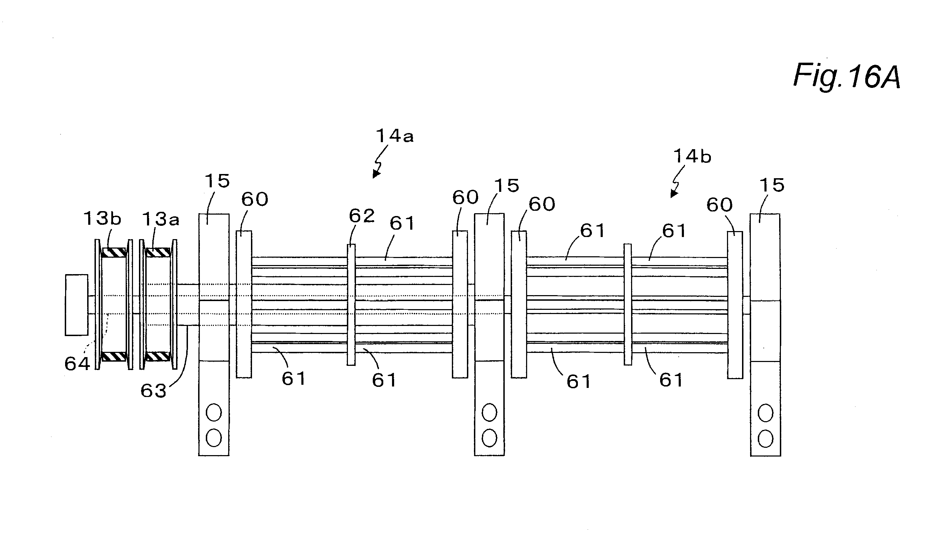

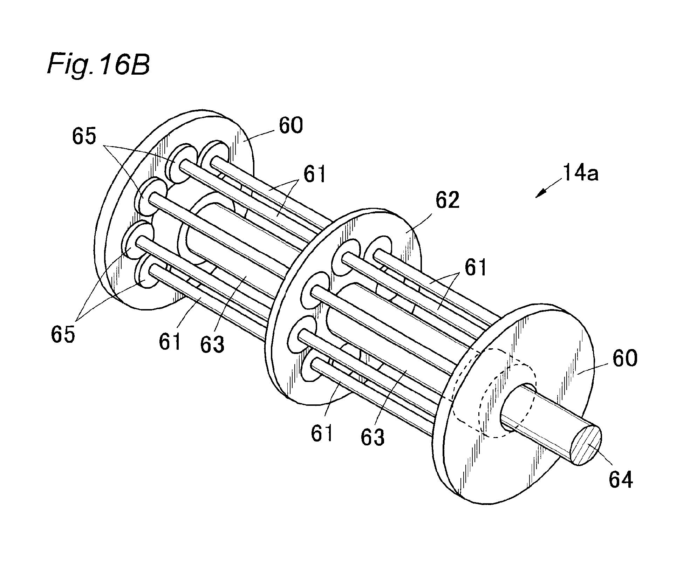

The rotating body fixed to the discharge side attachment part will now be described. The rotating body 14 is a member that rotates with the lateral axis parallel to the Y-axis as the rotating axis, as shown in Fig. 16B, and includes eight cylindrical rollers 61 extending parallel to the rotating axis and arranged at equidistance in the circumferential direction with the rotating axis of the circular disc as the center between two circular discs 60.

The outer diameter dimension of each roller may be reduced to reduce the contacting areas with the tubes and increase the pressure on the tubes, thereby forming a closed space in the conveying tube with a small tension, but the damage on the conveying tubes becomes significant due to friction involved in the rotation of the rotating body. Therefore, it is preferably appropriately designed according to the property of the tubes such as thickness and material of the tubes, the pulling amount in attaching the tubes etc. In the present embodiment, the rollers having a diameter of the same extent as the diameter of the tubes is used, specifically, the rollers having the outer diameter of 2φ are used. Each rollers 61 are fixed by way of the circular disc 60 and the bearing 65 so as to be freely rotatable with the lateral axis parallel to the Y-axis as the rotating axis.

The rotating shafts 63, 64 for rotating the rotating body when receiving power of the pump drive motors 12a, 12b are arranged at the center portion of the two circular discs, as described above. The rotating shafts 63, 64 are configured by double shaft bodies, where the shaft 63 on the outer side couples with the pulley 11a and the rotating body 14a on the side closer to the pulleys 11a, 13b, and the shaft 64 on the inner side couples with the pulley 11b and the rotating body 14b on the side distant from the pulleys 11a, 13b. The pulleys 11a, 13b are respectively transmitted with the driving force of the pump drive motors 12a, 12b via the drive belts 13a, 13b as described above, and are rotated independently.

Each rotating body 14a, 14b includes a separation plate 62 between the two circular discs 60. The separation plate is provided to separate the conduit unit arranged in parallel, and prevents the conveying tube 45 wound to the rotating body from shifting in the Y-axis direction when the rotating body is rotated, as will be hereinafter described.

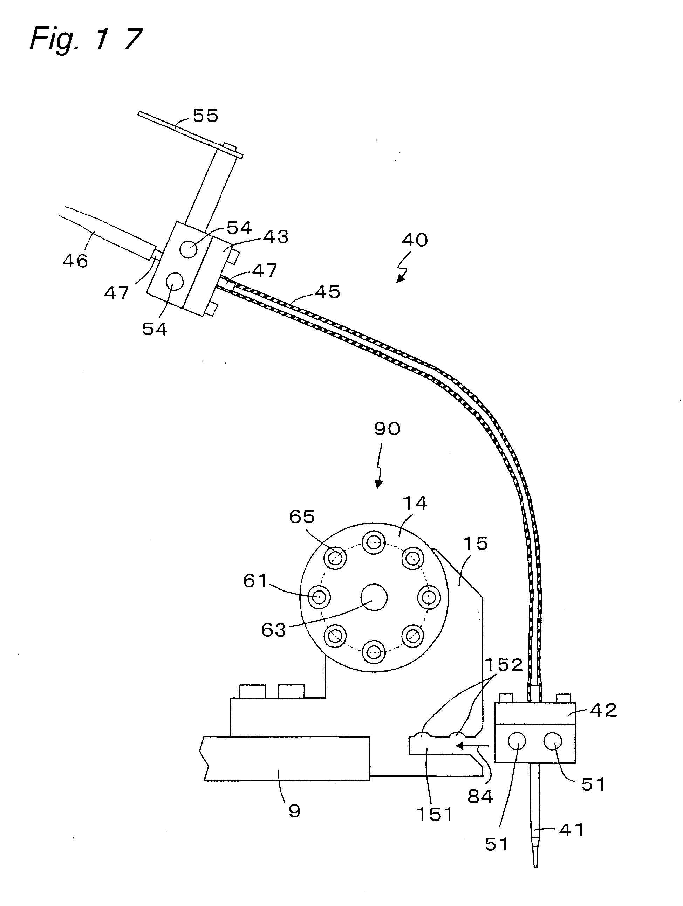

The operation of when the discharge driving mechanism 10 discharges a liquid will now be described. Fig. 17 is an explanatory view of when attaching the tube cassette unit 40 to the discharge side attachment part 15 and the introduction side attachment part 17. Since the upper part of the rotating body is opened and used as the tube cassette attachment and detachment region 90, the tube cassette unit is arranged in a liquid dispensing apparatus through the relevant region when attaching the tube cassette unit 40 to the tube cassette attachment unit. First, the discharge side holding part 42 is coupled to the discharge side attachment part 15. The engagement of the two parts is as described above, where the projections 51 of the discharge side holding part is fitted in and fixed to the cut-outs 151 of the discharge side attachment part, as shown with the arrow 84. Through such fixation, the discharge nozzle 41 is fixed downward in a substantially vertical direction.

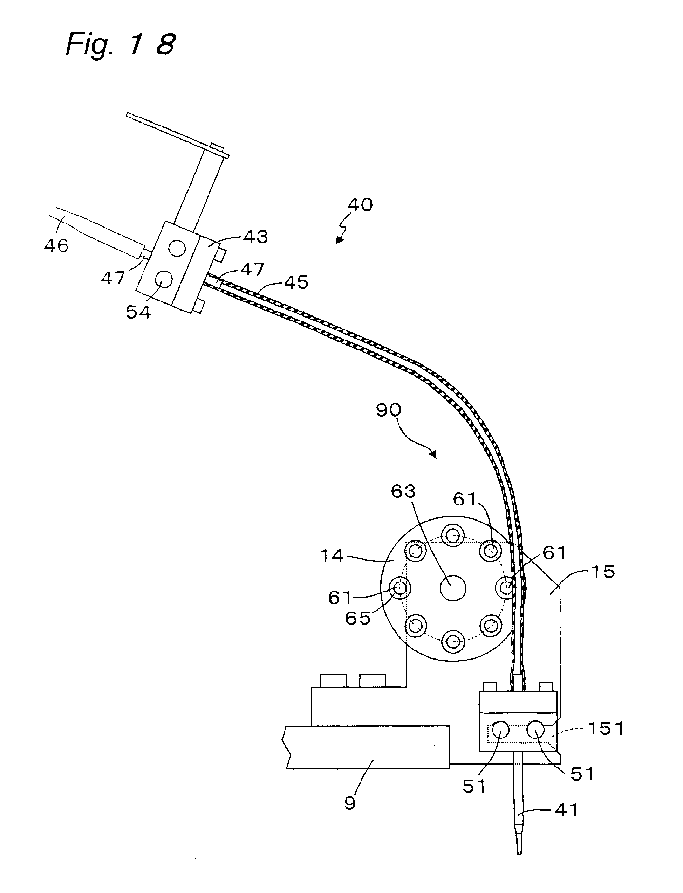

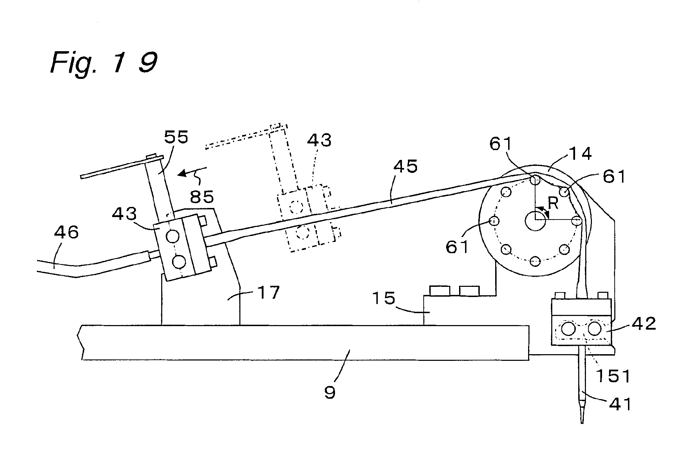

As shown in Fig. 18, the conveying tube 45 is wound to the upper side portion of the rotating body, and the introduction side holding part 43 is drawn towards the introduction side attachment part 17. In doing so, the handle 55 of the introduction side holding part is preferably griped. In this case, the discharge nozzle of the discharge side holding part is facing downward in the vertical direction, and the relay pipe of the introduction side holding part is fixed slightly inclined so that the downstream side is oriented slightly upward, and thus the conveying tube 45 is contacted to a plurality of rollers 61 of the rotating body 14 and wound to the rotating body 14 at a winding angle R, which is smaller than or equal to 180 degrees, specifically, at an angle of substantially 90 degrees in the present embodiment (see Fig. 19). In order to attach the conveying tube to the rotating body in the extended state through the conveying tube attachment and detachment space on the upper side of the rollers, the winding angle of the conveying tube is preferably formed to between about 65 degrees to 135 degrees, more preferably to between 90 to 120 degrees. When the winding angle of the conveying tube becomes smaller, the tension applied on the conveying tube to form the closed space in the conveying tube must be increased, and thus is preferably greater than or equal to 65 degrees.

The conveying tube is configured to a length that does not reach the introduction side attachment part 15 as shown with a broken line in Fig. 19 when the discharge side holding part 52 engages the discharge side attachment part 15 and the tube is wound to the roller 61 of the rotating body 14. The introduction side holding part 43 is pulled to the introduction side attachment part 15 side in this state, as shown with the arrow 85 in Fig. 19, to engage the introduction side holding part 43 with the introduction side attachment part 15. The conveying tube 45 is configured so as to become a length of about 120% to 200%, more preferably to substantially about 150% with respect to the non-pulled length. The extent of the pulling length can be appropriately adjusted according to the property of the conveying tube used.

After attaching the tube cassette unit 40 with the discharge side holding part 42 and the introduction side holding part 43, the third holding part 44 is attached to the liquid tank 30, and the supply pipe is set so as to be immersed in the liquid stored in the liquid tank 30.

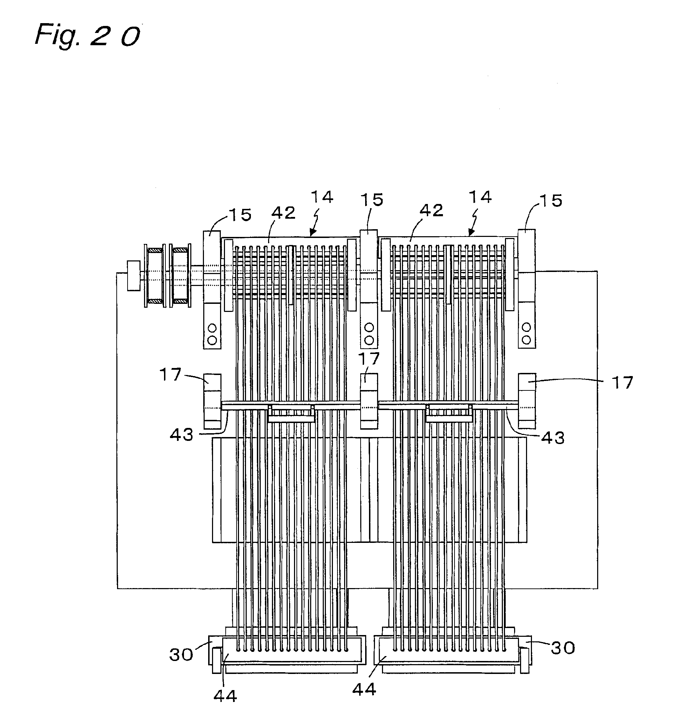

In the present embodiment, the tube cassette attachment unit is configured to allow two tube cassette units 40 to be attached, and thus two tube cassette units are attached. Fig. 20 is a view showing a state in which two tube cassette units 40 are attached to the tube cassette attachment unit. In attaching the tube cassette unit 40, eight conveying tubes 45 are arranged on each side of the separation plate 62 of the rotating body.

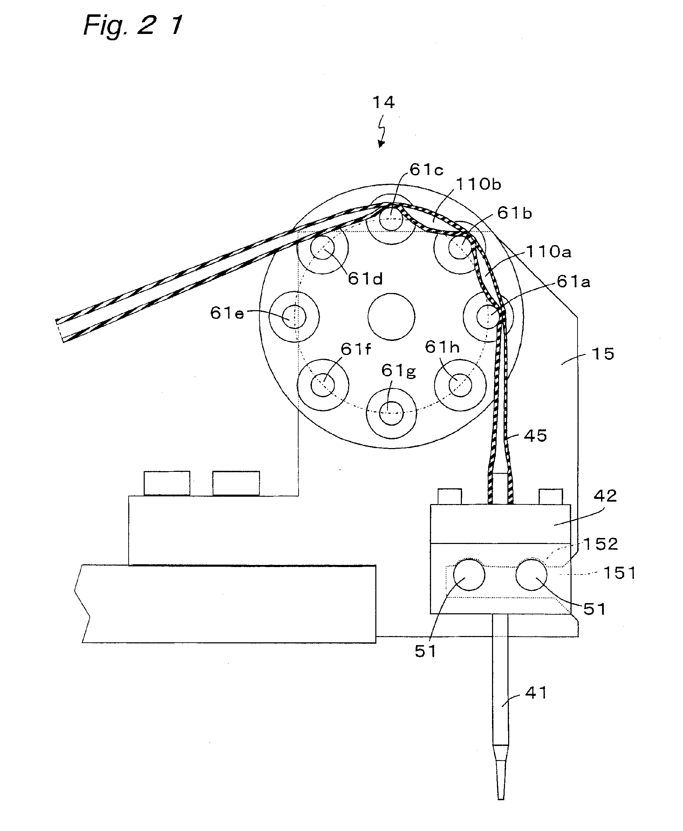

When the tube cassette unit 40 is attached in the above manner, a plurality of rollers 61 of the rotating body 14 contact the conveying tube, whereby the conveying tube 45 is constricted by the roller 61 according to the extent of pulling as shown in Fig. 21, forming closed spaces 110a, 110b between two adjacent rollers 61. In order to distinguish the roller 61, which position changes due to the rotation of the rotating body 14, the roller 61 is indicated as 61a to 61h, where the closed spaced constricted and formed by the rollers 61a and 61b is 110a, and the closed spaced constricted and formed by the rollers 61b and 61c is 110b.

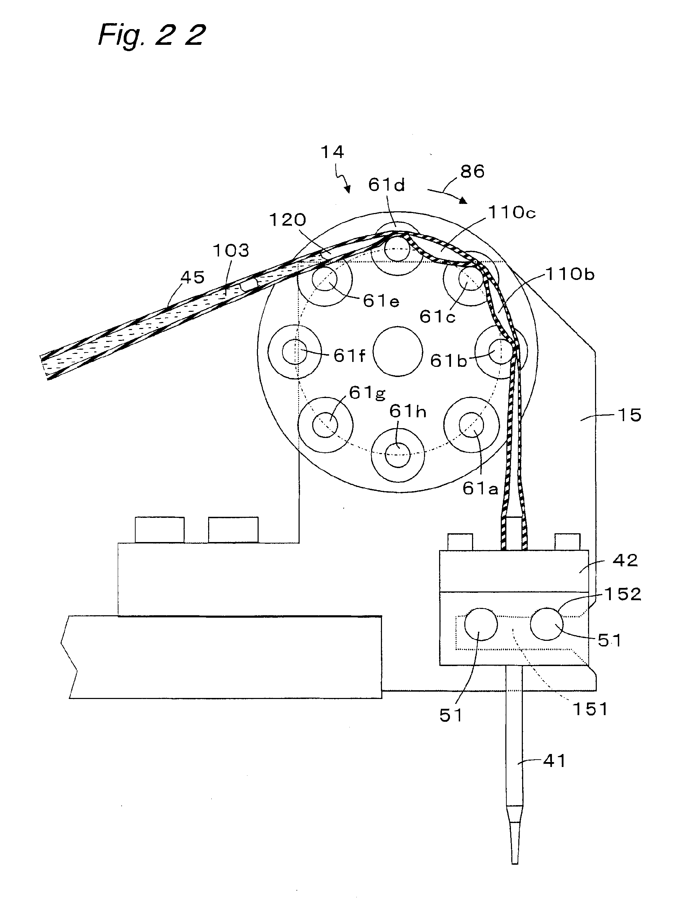

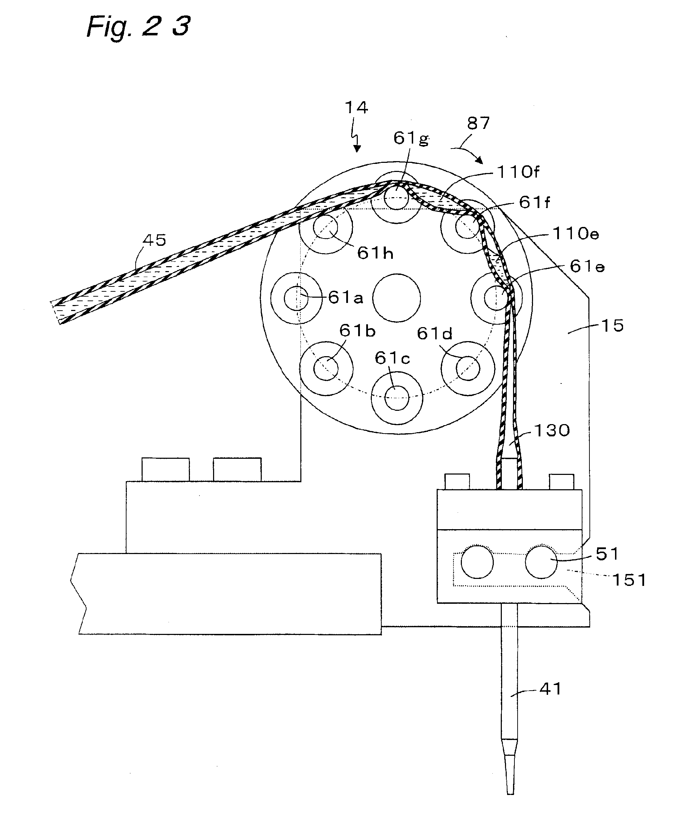

The air exists inside 120 the conveying tube 45 before the tube cassette unit 40 is attached and the rotating body 14 is rotatably driven. When the rotating body 14 is rotated in the direction shown with an arrow 86 in this state, the closed spaces 110a, 110b move towards the discharge side as shown in Fig. 22, and as a result, the liquid 103 is conveyed through the supply pipe 48. The liquid 103 is introduced into the closed space by repeating such operation, as shown in Fig. 23. In Fig. 23, the closed space 110e is formed by rollers 61e and 61f, and the closed space 110f is formed by rollers 61f and 61g.

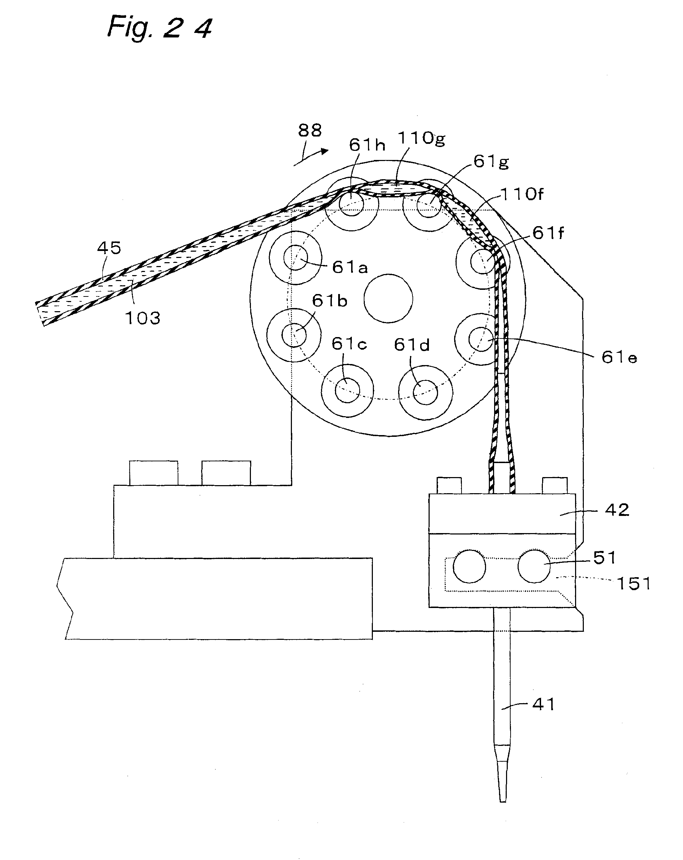

When the rotating body is further rotated in the direction of an arrow 87 in this state, the roller 61e moves away from the conveying tube 45 as shown in Fig. 24, and as a result, the closed space 110e is released due to the flexibility of the conveying tube 45, and the liquid accumulated in the closed space 110e moves towards the discharge nozzle 41 side.

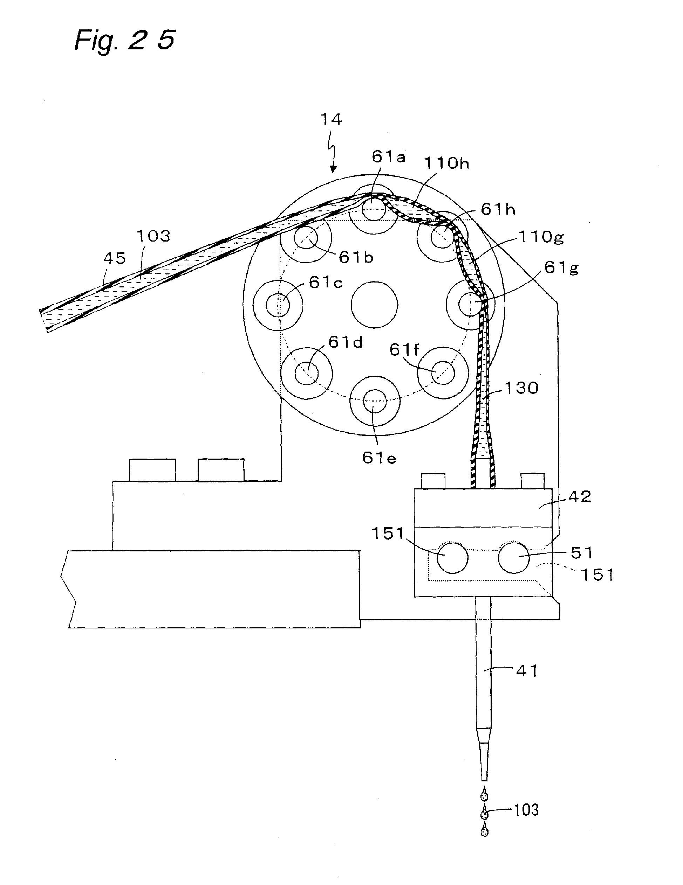

Furthermore, when the rotating body 14 is further moved as shown with an arrow 88, the closed space 110f is released and the liquid is conveyed to the discharge nozzle side as shown in Fig. 25. The liquid 103 is discharged from the discharge nozzle 41 by continuously repeating such operation.

The smallest unit of the discharging amount of the liquid from the discharge nozzle 41 is the amount of liquid accumulated in one closed space 110. The volume of the closed space becomes substantially the same since the roller 61 is arranged at substantially equidistant. Thus, the discharging amount of the liquid is determined by the number of closed spaces released by the rotation of the rotating body 14. The rotation angle of the rotating body 14 is determined by the rotation angle of the pump drive motors 12a, 12b, and thus the number of times the detection light of the photo-interpreter has been conducted or shielded is counted to control the rotation angle of the rotating body 14, thereby controlling the amount of liquid discharged from the discharge nozzle 41.

When detaching the tube cassette unit 40 from the tube cassette attachment unit, the introduction side holding part 43 is pulled towards the supply pipe 48 side to be detached from the introduction side attachment part 17, and thereafter, the discharge side holding part 42 is detached form the discharge side attachment part 15. The conveying tube 45 is simply wound to the roller in the pulled state, and thus the tube cassette unit can be detached from the liquid dispensing apparatus 1 through the tube cassette attachment and detachment region by simply detaching the introduction side and the discharge side holding parts, thereby reducing the trouble of changing the tube cassette unit 40.

In other words, after setting the tube cassette unit in the liquid dispensing apparatus 1 and conveying a predetermined liquid, the relevant tube cassette unit can be easily detached and a different tube cassette unit may be set to the liquid dispensing apparatus to convey the liquid with a very simple step. Since the tube cassette unit can be easily changed, the problems of contamination and the like of the liquids to be discharged are reliably prevented in the liquid dispensing apparatus 1 etc.

As described above, according to the liquid dispensing apparatus according to the present embodiment, the liquid can be supplied to the well column of one column all at once since the liquid is supplied using the tube cassette unit including a plurality of discharge nozzles arranged at a pitch corresponding to the well column in one column arranged in the microtiter plate. Furthermore, the tube cassette unit includes the introduction side holding part and the discharge side holding part for unitizing a plurality of tubes and collectively fixing the same, and thus the tube cassette unit is easily handled.

Furthermore, according to the liquid dispensing apparatus according to the present embodiment, the pressing body for sandwiching the tube becomes unnecessary since the introduction side holding part and the discharge side holding part of the tube cassette unit are attached to the roller with the conveying tube of the tube cassette unit in the extended state to form the closed space in the conveying tube. Therefore, attachment and detachment of the tube cassette unit are facilitated.

The tube cassette unit includes a pressing plate at the introduction side holding part and the discharge side holding part, so that the conveying tube held in the extended state is prevented from slipping out from the discharge nozzle and the relay pipe inserted therein.

The present invention is not limited to the above embodiments and various other modes are also practicable.

For example the present embodiment is a liquid dispensing apparatus, but the present invention is not limited to such apparatus, and may be widely applied as an apparatus for conveying the liquid present in the conveying tube through press-rolling action. For example, use is made in infusion liquid pump and the like.

The angle at which the conveying tube is wound to the roller of the rotating body may not be substantially 90 degrees as in the above embodiment, and may be appropriately designed in a range of contacting at least two rollers of the rotating body. In other words, the angle at which the conveying tube is wound to the two rollers differs depending on the number of rollers arranged on the rotating body, and thus can be appropriately adjusted according to the number of rollers, the number of closed spaces to be formed etc.

For example, the rotating body includes eight rollers, and the tube cassette attachment unit is arranged at a position the conveying tube is wound across three rollers in the embodiment, but is not limited to such configuration. The roller arranged at the rotating body only needs to be at least three or more so that at least one closed space is formed in the conveying tube at any phase. Since the angle formed by the adjacent rollers changes when the number of rollers changes, the winding angle of the conveying tube must also be appropriately adjusted.

Moreover, when winding the conveying tube across three or more rollers to form a plurality of closed spaces, the winding angle of the conveying tube simply needs to be adjusted. In this case, since the winding angle of greater than or equal to 180 degrees becomes necessary if the rollers arranged at the rotating body are three, the rotating body arranged with four or more rollers is preferably used.

The tube cassette unit does not necessarily need the introducing tube and the third holding part, and the relay pipe inserted into the conveying tube may be directly immersed in the liquid tank.

In the present embodiment, the microtiter plate 100 used has 16 wells arrayed in one column (384 wells), and the pitch of the discharge nozzle of the tube cassette unit is adjusted to the pitch of such well, so that the discharge of the liquid to one well column is performed with one discharging operation, but is not limited thereto. For example, when discharging the liquid to the microtiter plate (1536 wells) including 32 wells in one column, the pitch of the discharge nozzle of the tube cassette unit may be the pitch worth of two wells of the microtiter plate, in which case, the liquid is supplied to one well column of the microtiter plate with two discharging operations. Specifically, after discharging to the wells at the odd number positions in the first discharging operation, the Y-axis motor may be driven to move the mounting table by one well, and then the liquid may be discharged to the wells at the even number positions. The configuration of supplying the liquid to one well column with a number of discharging operations is effective when the number of wells in one column is further increased etc.

Arbitrary embodiments of the various embodiments described above may be appropriately combined to obtain the respective effect.

The present invention is sufficiently described in relation to the preferred embodiments with reference to the accompanied drawings, but it should be apparent to those skilled in the art that various modifications and corrections may be made. Such modifications and corrections should be recognized as being inclusive without deviating from the scope of the present invention defined in the appended claims.

## Claims

1. A liquid conveying device comprising:
a rotating body (14), configured with a lateral axis as a rotating axis and rotatable with the rotating axis as a center, arranged with at least three rollers (61) at equidistance in a circumferential form with the rotating axis as the center;
a tube cassette unit (40, 40a) including a flexible conveying tube (45), a first pipe body (47, 47a) inserted into a liquid introduction side end of the conveying tube, an introduction side holding part (43, 43a) for holding the first pipe body, a second pipe body (41, 41a) inserted into a liquid discharge side end of the conveying tube, and a discharging side holding part (42, 42a) for holding the second pipe body;
a tube cassette attachment unit (15, 17) for removably attaching the introduction side holding part (43, 43a) and the discharge side holding part (42, 42a) with the conveying tube (45) wound to at least two rollers out of the rollers (61) of the rotating body to extend to an extent a closed space (110a 110b, 110c, 110e, 110f) is formed in the conveying tube; and
a rotating body drive mechanism (12a, 12b) for rotating the rotating body (14) with the rotating axis as the center to change a contacting position of the at least two rollers (61) and the conveying tube (45) and moving the closed space (110a 110b, 110c, 110e, 110f) towards a liquid discharge side end side.

2. The liquid conveying device according to claim 1, wherein a side opposite a side contacting the roller of a position the conveying tube (45) is wound to the roller (61) of the rotating body is released as a conveying tube attachment and detachment space (90).

3. The liquid conveying device according to claim 1, wherein the tube cassette attachment unit (15, 17) attaches the tube cassette unit (40, 40a) so that the conveying tube (45) is wound to at least three rollers to continuously form a plurality of closed spaces (110a, 110b, 110c, 110e, 110f).

4. The liquid conveying device according to claim 1, wherein the introduction side holding part (43, 43a) is configured to couple and hold the liquid introduction side end of the conveying tube (45) to the first pipe body (47, 47a), and the discharge side holding part (42, 42a) is configured to couple and hold the discharge side end of the conveying tube (45) to the second pipe body (41, 41a).

5. The liquid conveying device according to claim 4, wherein the introduction side holding part (43) includes an introduction side pipe holding member (52) through which the first pipe body (47) is passed for fixing and a coupling member (53), integrally coupled with the introduction side pipe holding member (52), for pressing and holding one end of the conveying tube (45) as an insertion site of the first pipe (47) on an outer surface of the first pipe body (47); and
the discharge holding member (42) includes a plate shaped discharge side pipe holding member (49) through which the second pipe body (41) is passed for fixing for fixing and a plate shaped coupling member (50), integrally coupled with the discharge side pipe holding member (49), for pressing and holding the other end of the conveying tube (45) or an insertion site of the second pipe (41) to an outer surface of the second pipe body (41).

6. The liquid conveying device according to claim 5, wherein the coupling member (53) of the introduction side holding part is a plate shaped body including a through hole fittable with the first pipe body (47), the through hole being configured so as to gradually narrow from an insertion surface towards a back surface so that an inner diameter dimension of the insertion surface (53b) of a side into which the first pipe body is inserted becomes greater than an outer diameter dimension of the first pipe body fixed to the introduction side pipe holding member, and so that an inner diameter dimension of the back surface (53a) of the insertion surface becomes substantially the same as the outer diameter dimension of the first pipe body; and
the coupling member (50) of the discharge side holding part is a plate shaped body including a through hole fittable with the second pipe body (41), the through hole being configured so as to gradually narrow from an insertion surface towards a back surface so that an inner diameter dimension of the insertion surface (50b) of a side into which the second pipe body (41) is inserted becomes greater than an outer diameter dimension of the second pipe body (41) fixed to the discharge side pipe holding member, and so that an inner diameter dimension of the back surface (50a) of the insertion surface becomes substantially the same as the outer diameter dimension of the second pipe body (41).

7. The liquid conveying device according to claim 1, wherein the introduction side holding part (43a) includes an introduction side pipe holding member (52a) for holding the first pipe body (47a) so as to be freely movable in the axis direction, and a position adjustment mechanism (79a, 78b) for adjusting a position of the first pipe body (47a) in the axis direction thereof with respect to the introduction side pipe holding member.

8. The liquid conveying device according to claim 7, wherein the first pipe body (47a) includes a flange part (77b) arranged projecting to a periphery at an intermediate position in the axis direction;
the introduction side pipe holding member (52a) includes a through hole (78a) to be fitted with the first pipe body; and
the position adjustment mechanism (79a, 78b) includes a screw hole (78b) arranged at the flange part or at a position facing the flange part of the introduction side pipe holding member, and an adjustment screw (79a) screw-fit to the screw hole to adjust a distance between the flange part (77b) and the introduction side pipe holding member (52a) in the axis direction.

9. The liquid conveying device according to claim 1, wherein the second pipe body (41, 41a) is a discharge nozzle.

10. The liquid conveying device according to claim 1, wherein the tube cassette unit (40, 40a) further includes,
a liquid supply pipe (48) communicating with a liquid storage part (30) for storing a liquid; and
an introducing tube (46) communicating with the conveying tube (45) by inserting the liquid supply pipe (48) into one end thereof and the other end side of the first pipe body (47, 47a) into the other end thereof.

11. The liquid conveying device according to claim 1, wherein the tube cassette unit (40, 40a) includes a plurality of the conveying tubes (45) arranged parallel in a band shape, first pipe bodies (47, 47a) inserted into liquid introduction side ends of all the conveying tubes, introduction side holding parts (43, 43a) for holding the first pipe bodies, second pipe bodies (41, 41a) inserted into liquid discharge side ends of all the conveying tubes, and discharge side holding parts (42, 42a) for holding the second pipe bodies; and
all the conveying tubes are wound to the at least two rollers (61) of the rotating body to form closed spaces (110a, 110b, 110c, 110d, 110e, 110f), the closed spaces being simultaneously moved towards the liquid discharge side end side with a rotation of the rotating body (14).

12. The liquid conveying device according to claim 11, wherein the rollers (61) are arranged so as to be parallel to the rotating axis.

13. The liquid conveying device according to claim 12, wherein the rotating body (14) includes a plurality of cylindrical rollers (61) formed extending perpendicular to two circular discs and rotatable with the axis as the center between the two circular discs (60) arranged parallel to each other at a distance.

14. The liquid conveying device according to claim 1, wherein the rotating body drive mechanism (12, 12a) includes a rotation angle detection part (31a, 31b) for detecting a rotation angle of the rotating body (14), and a rotation angle controlling part (71) for controlling the conveying amount of the liquid by controlling the rotation angle of the rotating body detected by the rotation angle detection part.

15. A tube cassette unit removably attached to a liquid discharge device (1) including a rotating body (14), configured with a lateral axis as a rotating axis and rotatable with the rotating axis as a center, arranged with
at least three rollers (61) at equidistance in a circumferential form with the rotating axis as the center, for applying press-rolling action to conveying tubes (45) with the rollers (61) to convey liquid to discharge nozzles (41, 41a) and discharge from the discharge nozzles to a microtiter plate (100), the tube cassette unit comprising:
a plurality of flexible conveying tubes (45) arranged in parallel in a band shape and wound to the at least two rollers (61) of the rotating body while being extended from an upper sides;
a plurality of relay pipes (47, 47a) serving as a first pipe body and having one ends respectively inserted into one ends of the plurality of the conveying tubes;
a plurality of discharge nozzles (41, 41a) serving as a second pipe body, respectively inserted into the other ends of the plurality of the conveying tubes (45), and arranged according to a pitch of wells (101a, 101b) in one column arranged in the microtiter plate (100);
an introduction side holding part (43, 43a) for holding the relay pipes (47, 47a), configured to be removably attached to the liquid discharge device;
a discharge side holding part (42, 42a) for holding the discharge nozzles (41, 41a), configured to be removably attached to the liquid discharge device (1); and
a plurality of introducing tubes (46) having one ends respectively inserted into the other ends of the plurality of relay pipes to respectively communicate with the conveying tubes (45), for suctioning the liquid from the other ends.

16. The tube cassette unit according to claim 15, wherein the plurality of discharge nozzles (41, 41a) are arranged at a pitch same as or at a pitch integral multiples of a pitch of adjacent wells (101a, 101b) of the microtiter plate (100).

17. The tube cassette unit according to claim 15, wherein the introduction side holding part (43) includes an introduction side pipe holding member (52) through which the relay pipe (47) is passed for fixing, and a coupling member (53) integrally coupled with the introduction side pipe holding member (52), for pressing and holding one ends of the conveying tubes as insertion sites of the relay pipes on outer surfaces of the relay pipes; and
the discharge side holding part (42) includes a plate shaped discharge side pipe holding member (49) through which the discharge nozzles (41) is passed for fixing, and a plate shaped coupling member (50), integrally coupled with the discharge side pipe holding member, for pressing and then holding the other ends of the conveying tubes (45) as an insertion sites of the discharge nozzles on an outer surfaces of the discharge nozzles.

18. The tube cassette unit according to claim 17, wherein the coupling member (53) of the introduction side holding part is a plate shaped body including a through hole fittable with the relay pipes (47), the through hole being configured so as to gradually narrow from an insertion surface towards a back surface so that an inner diameter dimension of the insertion surface (53b) of a side into which the relay pipes are inserted becomes greater than an outer diameter dimensions of the relay pipes fixed to the introduction side pipe holding member, and so that an inner diameter dimension of the back surface (53b) of the insertion surface becomes substantially the same as the outer diameter dimensions of the relay pipes; and
the coupling member (50) of the discharge side holding part is a plate shaped body including a through hole fittable with the discharge nozzles (41), the through hole being configured so as to gradually narrow from an insertion surface towards a back surface so that an inner diameter dimension of the insertion surface (50b) of a side into which the second pipe body is inserted (41) becomes greater than an outer diameter dimension of the discharge nozzles fixed to the discharge side pipe holding member, and so that an inner diameter dimension of the back surface (50a) of the insertion surface becomes substantially the same as the outer diameter dimension of the discharge nozzle (41).

19. The tube cassette unit according to claim 15, wherein the introduction side holding part (43, 43a) includes a griping part (55, 55a) used in pulling the introduction side holding part to extend the conveying tubes (45) after the discharge side holding part is attached to the liquid discharge device.

20. A tube cassette unit removably attached to a liquid discharge device (1) including a rotating body (14), configured with a lateral axis as a rotating axis and rotatable with the rotating axis as a center, arranged with at least three rollers (61) at equidistance in a circumferential form with the rotating axis as the center, for applying press-rolling action to conveying tubes (45) with the rollers (61) to convey liquid to discharge nozzles (41b), and discharge from the discharge nozzles to a microtiter plate (100), the tube cassette unit comprising:
a plurality of flexible conveying tubes (45) arranged in parallel in a band shape and wound to the at least two rollers (61) of the rotating body while being extended from upper sides;
a plurality of relay pipes (47a) serving as a first pipe body and having one ends respectively inserted into one ends of the plurality of the conveying tube;
a plurality of discharge nozzles (41a) respectively serving as a second pipe body, respectively inserted into the other ends of the plurality of the conveying tubes (45), and arranged according to a pitch of wells (101a, 101b) in one column arranged in the microtiter plate (100);
an introduction side holding part (43a), removably attached to the liquid discharging device (1) and including an introduction side holding member (52a) for holding the plurality of relay pipes (47a) so as to be movable in an axis direction, and a position of the relay pipes adjustment mechanism (78b, 79a) for individually adjusting a position in the axis direction with respect to the introduction side pipe holding member;
a discharge side holding part (42a) for holding the discharge nozzles (41a) and configured to be removably attached to the liquid discharge device (1); and
a plurality of introducing tubes (46) having one ends respectively inserted into the other ends of the plurality of relay pipes to respectively communicate with the conveying tubes (45), for suctioning the liquid from the other ends.

21. The tube cassette unit according to claim 20, wherein the relay pipe (47a) includes a flange part (77b) arranged projecting to a periphery at an intermediate position in the axis direction;
the introduction side pipe holding member (52a) includes a through hole (78a) in which the relay pipe is fitted; and
the position adjustment mechanism (78b, 79a) includes a screw hole (78b) arranged at the flange part (77b) or at a position facing the flange part of the introduction side pipe holding member (52a), and an adjustment screw (79a) screwed into the screw hole (78b) to adjust a distance between the flange part (77b) and the introduction side pipe holding member in the axis direction.

22. The tube cassette unit according to claim 20, wherein
the discharge nozzle (47a) includes a contacting part (72b) for contacting to the discharge side holding part at the intermediate position in the axis direction; and
the discharge side holding part (41a) includes a plate shaped discharge side pipe holding member (49a) including a through hole (75a) with which the discharge nozzle is fitted, and a fixing member (74b) for fixing the discharge nozzle (47b) in an inserted state until the contacting part (72b) of the discharge nozzles contacts the discharge side pipe holding member (49a).

23. The tube cassette unit according to claim 22, wherein the contacting part (72b) is constructed as a flange part arranged so as to contact a surface facing the introduction side holding part of the discharge side pipe holding member.

24. A tube cassette unit according to any one of claims 20 to 23, wherein the plurality of discharge nozzles (47a) is arranged at a pitch same as or at a pitch integral multiples of a pitch of the adjacent wells (101a, 101b) of the microtiter plate (100).
